(19) Europäisches Patentamt
European Patent Office
Office européen des brevets

(11) **EP 3 691 188 B1**

(12) **EUROPEAN PATENT SPECIFICATION**

(45) Date of publication and mention
of the grant of the patent:
**06.07.2022 Bulletin 2022/27**

(21) Application number: **20150149.1**

(22) Date of filing: **03.01.2020**

(51) International Patent Classification (IPC):
**H04L 41/0631** (2022.01)   **G06N 3/04** (2006.01)

(52) Cooperative Patent Classification (CPC):
**H04L 41/0631; G06N 3/0427; G06N 3/0481;
H04L 41/0654;** H04L 41/16

(54) **ROOT CAUSE DETERMINATION IN COMPUTER NETWORKS**

GRUNDURSACHENBESTIMMUNG IN COMPUTERNETZWERKEN

DÉTERMINATION DES CAUSES PREMIÈRES D'ERREURS DANS DES RÉSEAUX
INFORMATIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.01.2019 FR 1900776**

(43) Date of publication of application:
**05.08.2020 Bulletin 2020/32**

(73) Proprietor: **Amadeus S.A.S.
06410 Biot (FR)**

(72) Inventor: **Vadász, Dénes
06410 BIOT - Sophia Antipolis (FR)**

(74) Representative: **Samson & Partner Patentanwälte
mbB
Widenmayerstraße 6
80538 München (DE)**

(56) References cited:
**WO-A1-2018/228672      US-A1- 2003 088 669
US-A1- 2016 004 584**

• **HE YAN ET AL: "G-RCA", IEEE / ACM
TRANSACTIONS ON NETWORKING, IEEE / ACM,
NEW YORK, NY, US, vol. 20, no. 6, 1 December
2012 (2012-12-01), pages 1734-1747,
XP058029874, ISSN: 1063-6692, DOI:
10.1109/TNET.2012.2188837**
• **MARC SOL\'E ET AL: "Survey on Models and
Techniques for Root-Cause Analysis",
ARXIV.ORG, CORNELL UNIVERSITY LIBRARY,
201 OLIN LIBRARY CORNELL UNIVERSITY
ITHACA, NY 14853, 30 January 2017 (2017-01-30),
XP080752360,**
• **ALBERT MESTRES ET AL: "Understanding the
Modeling of Computer Network Delays using
Neural Networks", ARXIV.ORG, CORNELL
UNIVERSITY LIBRARY, 201 OLIN LIBRARY
CORNELL UNIVERSITY ITHACA, NY 14853, 23
July 2018 (2018-07-23), XP081250920,**
• **Hermann Wietgrefe ET AL: "Using Neural
Networks for Alarm Correlation in Cellular Phone
Networks", , 7 February 1997 (1997-02-07), pages
1-10, XP055610857, Retrieved from the Internet:
URL:https://www.ikt.uni-hannover.de/upload
s/tx_tkpublikationen/WTJ1997.pdf [retrieved on
2019-08-05]**

**Description**

The invention relates to the field of identifying a root cause of simultaneously occurring errors in a computer network.

A survey of fault localization techniques in computer networks by Malgorzata Steindera and Adarshpal S. Sethib, Science of Computer Programming, Volume 53, Issue 2, November 2004, p. 165-194 relates to several different approaches of fault localization, inter alia based on a belief network based on a directed acyclic dependency graph.

Knowledge-Based Artificial Neural Networks by Geoffrey G. Towell and Jude W. Shavlik, Artificial Intelligence, volume 70, p. 119-165 describes mapping a domain theory, which is a collection of propositions that describe task-specific inferences that can be drawn from the given facts, to a neural network. The building of the neural network is performed beginning with a basis-neural network reflecting initial symbolic knowledge, which is trained by training examples to become a trained neural network. The formation of the neural network is based, inter alia, on transforming the initial propositional rules containing (conjunctions and disjunctions) to a hierarchical structure, which is then mapped to a neural network.

Using neural networks for alarm correlation in cellular phone networks (1997) by Hermann Wietgrefe et. al., in Proceedings of the International Workshop on Applications of Neural Networks in Telecommunication, describes the application of a neural network to determine the root cause of errors in a telephone network. A neural network is built with a plurality of hidden layers, i.e. layers the neurons of which do not correspond to system components of the telephone network. The connections between the neurons are determined by a learning method.

According to a first aspect, a method of determining a root cause of simultaneously occurring errors in a computer network is provided. The method comprises: creating an error-propagation model, which is based on interdependencies of a plurality of system components of the computer network, mapping the error-propagation model to a neural network or to a network of computational operators comprising sum operators and sigmoid operators; receiving a plurality of error messages generated by a monitoring system indicative of an activated fault; analyzing the error messages based on the underlying error-propagation model using the neural network or the network of operators comprising sum operators and sigmoid operators, wherein the probability that an error actually propagates to a dependent network component from other network components the dependent network component depends on and the probability that the monitoring system actually detects the error and issues error messages are considered in the analysis, the probability that an error propagates to a dependent network component from other network components the dependent network component being determined by at least one of (i) experiments and (ii) expert knowledge; determining, by the analysis, probable root-cause fault candidates; outputting the determined candidates for the root cause.

According to a second aspect, a computer network is provided. The computer network comprises at least two network components, a monitoring system for identifying errors in the computer network and an inference engine for determining a root cause of the errors in a computer network, the inference engine being programmed to: create an error-propagation model, which is based on interdependencies of a plurality of system components of the computer network; map the error-propagation model to a neural network or to a network of computational operators comprising sum operators and sigmoid operators; receive a plurality of error messages generated by a monitoring system indicative of the fault; analyze the error messages based on the underlying error-propagation model using the neural network , wherein the probability that an error actually propagates to a dependent network component from other network components the dependent network component depends on and the probability that the monitoring system actually detects the error and issues error messages are considered in the analysis the probability that an error propagates to a dependent network component from other network components the dependent network component being determined by at least one of (i) experiments and (ii) expert knowledge; determine, by the analysis, probable root-cause fault candidates; output the determined candidates for the root cause.

A fault in a computer network is a potentially dormant (non-manifesting) defect in one or more system components. System components comprise, computers, firewalls, routers, switches, server or the like. When preconditions specific to the fault are met, it may become active and manifest in dozens or hundreds of errors. An error happens when a fault starts to actually manifest. A monitoring system detects all or part of the errors. An error message is an error reported by the monitoring system. Human operators are overwhelmed when trying to make sense out of these messages. The messages are often only indirectly related to the root-cause of the errors and thus it is difficult to evaluate their root cause. The root cause could be a broken network connection between two network nodes, a broken switch, etc.

According to a first aspect, a method of determining a root cause of simultaneously occurring errors in a computer network is provided.

The method is for example carried out by: (i) installing a monitoring system to detect errors and report them in error messages; (ii) creating an error-propagation model based on interdependencies of a plurality of system components of the computer network and directly mapping it to a neural network (so that the neural network requires no further training); (iii) translating the error messages to real numbers applicable as inputs to the neural network and performing computations defined by the neural network (analysis); (iv) converting the value of each output of the neural network to an estimation of the marginal probability of an error being present at a component of the computer network, corresponding to the determination of probable root cause candidates; (v) displaying the part of the error propagation model that is most probable to contain the root-cause of the errors, which are, the root cause candidates.

A monitoring system evaluates the health of all the observed system components and may respond to the activation of a fault in any of the monitored components with one or more error messages. The typical number varies with the comprehensiveness of the monitoring system and with the size of the monitored computer network.

The monitoring system comprises at least one sensor. To provide an example, a sensor is placed at a connection point to each subnetwork, to each cluster or for each hub, switch etc.

In some embodiments, the sensors comprise at least one of (i) hardware based sensors and (ii) software based sensors. The sensor may be a physical sensor, such as a current/voltage or heat sensor. On the other hand the sensor may be a software module, e.g. an error handler, programmed to recognize and report software errors such as buffer overflow, tremendous loss of data packets, etc.

In general, a network component is, for example, observed by a plurality of sensors, for example, hardware sensors or software sensors. Conversely, a single sensor may monitor a plurality of system components.

The sensors are, for example, designed to work by continuously or repeatedly checking some conditions that depend on the proper working of the system components monitored by the sensor. There may be two exemplary sensor states, "Calm" and "Trouble":

"Calm" is the situation of a sensor when the evaluation of the conditions lead to the conclusion that all the components monitored by it are working properly. "Trouble" is the situation when the evaluation leads to the conclusion that at least one of the monitored components is not working properly. This internal state of the sensors is hidden from the outside observer of the sensor.

By the intention of the designer of the monitoring system, in the trouble state each sensor should send externally visible error messages, whereas in a calm situation no such messages should be generated. The presence or absence of the error messages determines the externally visible "alerting vs. silence" state of the sensors. Under real conditions, the sensors may generate spurious error messages in a calm situation or fail to generate error messages in a trouble situation.

The error messages issued by the sensor, for example, carry information identifying the issuing sensor. The sensors are often unable to differentiate the monitored components; therefore the error messages often lack information about which of the components the issuing sensor monitors actually failed.

The health status of a sensor is the hidden "calm vs. trouble" state of the sensor. The health status of a system component is the presence or absence of an error in the component, which is also impossible to directly observe. In this document, the trouble health status of a sensor and the health status of a component when an error is present in it are collectively called error status. When knowing the health status of a component implies knowledge about the health of another component or sensor, there is a dependency relationship between the two objects. For example, "sensor X monitors component Y" is a dependency relationship. Dependency relationships are also possible between pairs of system components, e.g. "server X mounts LUN Y" (if the LUN is unavailable, the server will have problems performing its tasks).

The dependency relations have a direction, i.e. knowing that one of the related objects (the dependency) is in an error state implies knowledge about the health of the other (the dependent), but not vice versa. In the context of the invention the direction of the relationship is understood as pointing from the dependency to the dependent.

From the point of view of the root cause analysis method being described, the exact nature of the error detected (for example the task that cannot be fulfilled by the failed component anymore) is not relevant; only the dependency relationships are.

According to the claimed method, an error-propagation model, which is based on interdependencies of a plurality of system components of the computer network is created.

The error-propagation model is a directed acyclic graph constructed from the dependency relationships of the components and sensors. The vertices of the graph are sensors and system components differentiable by the errors they may imply in other system components. That is, if errors in two system components A and B may imply errors in exactly the same set of other system components and with the same probability, then A and B are not differentiable by their impact on the other system components, and therefore A and B are modelled by the same vertex in the error-propagation model. The directed edges of the error propagation model represent the propagation probability of an error from the tail component (represented by the tail vertex) to the head component (represented by the head vertex); that is the probability that the system component or sensor H at the head of the edge is in the error status under the condition that the system component T at the tail of the edge is known to be in error status while all other system components potentially impacting H are known to be in an error-free state. Edges with propagation probability of zero are omitted from the graph.

Using such a model accounts for latent errors and spurious error messages.

The error-propagating model is built from topology information of the computer network by applying error propagation rules formulated by domain experts, corresponding to expert knowledge. An error propagation rule specifies the error propagation probability between a pair of components or a component-sensor pair, referring to the kinds of the involved components or sensors and their topological relationships (but not the concrete identities of the components or sensors).

For example, one such rule can be that "any sensor monitoring an end-to-end network connectivity will be in an error state with 95% probability if any of the network devices involved on the end-to-end path is in error". This rule is applied to the topology information by computing the list of system components on the end-to-end path monitored by each sensor, and adding an edge to the error propagation graph from each vertex representing such a system component to the vertex representing the monitoring sensor. The propagation probability of each edge added by this rule is 95%. Another example of such a rule is "if there is an error in a disk array, then with 10% probability there is an error in each of the logical volumes residing on the disk array". When this rule is applied, the assignment of logical volumes to disk arrays is extracted from the topology information. For each logical volume an edge with propagation probability of 10% is added to the error propagation model from the vertex representing the disk array the logical volume is mapped to, to the vertex representing the logical volume.

In some embodiments, the error propagation probability is determined by means of experiments.

For the purpose of root-cause analysis, the error-propagation model is mapped to a network of computational operators or to a neural network.

The error-propagation model is mapped by (i) creating a *sum operator* for each vertex and (ii) creating a *sigmoid operator* for each edge of the error-propagation model.

The sum operator has zero or more inputs (one for each outgoing edge of the vertex for which the operator is created) and one output. It works by adding up the real numbers presented to its inputs. In some embodiments, also a predefined constant parameter called bias value is added to these real numbers in the sum operator. The result of this addition is presented to the output of the sum operator.

The sigmoid operator has a single input and a single output and works by applying a sigmoid function to the real number presented on its input and presenting the result on its output.

The sigmoid function is, for example, parametrized by the difference between its upper and lower bounds, which we will call the weight of the edge.

The sigmoid operators realized by sigmoid functions couple an input potential to an output potential, represented by the upper and lower bounds, by a monotonously rising sigmoid function.

The input of each sigmoid operator is, for example, connected to the output of the sum operator created for the vertex at the head of the edge for which the sigmoid operator stands. The output of each sigmoid is connected to an input of the sum operator created for the vertex at the tail of the edge.

A network of computational operators created this way is, for example, computationally equivalent to a neural network in which the processing units are formed by merging the sigmoid operators with a copy of the sum operator in front of them.

For an error propagation model defining the same propagation probability for each outgoing edge of a given vertex, the bias and the sigmoid function are chosen so that in an error-free state of the computer network, the activation function is at its lower bound and swings from its lower bound to its upper bound already after the activation of the number of inputs that can be expected from the propagation probabilities of the outgoing edges.

In some embodiments, the error propagation model defining the same propagation probability for each outgoing edge of a given vertex and wherein the sigmoid function is defined by

[Math. 1]

$$S(E) = \log_2 \frac{1 + 2^{-w/2-E}}{2^{-w/2} + 2^{-E}}$$

[Math. 2]

$$w = 2 \cdot \frac{E_{max}}{n \cdot P},$$

where n is the number of edges through which the error propagates
wherein E is the input value of the sigmoid operator and wherein P is said propagation probability for each outgoing edge of a given vertex, and $E_{max}$ is a heuristic factor to scale the sigmoid function, set so that

[Math. 3]

$$S(E_{\max})_{|w=2} \approx 0.998$$

S (E) is the sigmoid function applied by an sigmoid operator, E is the input value of the sigmoid operator and w is the weight parameter of the operator. The lower and upper bounds of this function are -w/2 and +w/2.

In some embodiments, expert rules for creating the edges of the error propagation model define the same error propagation probability P for each of the n outgoing edges of a given vertex. In such embodiments, the weight of the sigmoid operators of the outgoing edges are set uniformly, according to the formula

[Math. 4]

$$w = 2 \cdot \frac{E_{max}}{n \cdot P}$$

And, in some embodiments utilizing a bias value for the summer, (in a reverse topological order of the error propagation graph), the bias value is calculated based on the sum of all inputs of a summer, under the condition that the system is error-free and the heuristic factor, wherein the bias values of all the sum operators directly or indirectly feeding into the current one are set by this rule. This functional relationship may be implemented by a formula of the following sort:

[Math. 5]

$$b = -E_{\max} - \sum_{i=1}^{n} e_{i,\text{FF}}$$

where $E_{max}$ is the heuristic factor, set so that

[Math. 6]

$$S(E_{\max})_{|w=2} \approx 0.998$$

And

| [Math. 7]

$$e_{i,\text{FF}}$$

is the $i$th input of the summer under the condition that the computer network is error-free and the bias value of all the sum operators directly or indirectly feeding into the current one are set by this rule.

The rationale for choosing the weight and bias value this way is that this choice ensures that in the error-free state the output of the sum operator will be low enough to drive the sigmoid operators connected to it to near their lower bound, while in a typical error propagation scenario the output of the sum operator will be high enough to drive the sigmoid operators connected to it to near their upper bound. The expected number of vertices to which the error propagates is $n \cdot P$, thus the expectation of the output of the sum operator with the above bias value is approximately

[Math. 8]

$$b + \sum_{i=1}^{n} e_{i,\mathrm{FF}} = -E_{\max}$$

in the error-free and

[Math. 9]

$$- E_{\max} + n \cdot P \cdot w = + E_{\max}$$

in the typical error scenario. If $w$ were calculated without multiplying the number of outgoing edges with the propagation probability as

[Math. 10]

$$2 \cdot \frac{E_{max}}{n},$$

without using the error propagation probability P, the missed alerts would cause the output of the sum operator to stay much below $+E_{\max}$ and thus prevent correctly inferring the health status of the component mapped to the vertex of the sum operator.

Thereby, the sigmoid function presented above provides an increased activation (increases the perceived number of error statuses in the dependent components and sensors) when the event of an error propagating from the dependency to the dependents is of low probability - corresponding to a low value of P. On the other hand, if the number of dependent components to which the error is expected to propagate is high - corresponding to a high value of $n \cdot P$ - the sigmoid function provides decreased activation compared to the case of a low expectation of error propagation.

Choosing the bias value as above provides compensation for potential false positive alerts.

The error-propagation model is directly mapped to a neural network (which is a kind of network of computational operators) by creating (i) a *processing unit* for each vertex and (ii) a *weighting operator* for each edge of the error-propagation model.

The processing unit has zero or more inputs (one for each outgoing edge of the vertex for which the operator is created) and one output. It works by adding up the real numbers presented to its inputs plus a bias value and applying to the sum a sigmoid function such that the difference between the upper and lower bounds of the sigmoid function is 1 and presenting the result on its output.

The weighting operator has a single input and a single output and works by multiplying the real number presented on its input with a constant *weight* parameter and presenting the result on its output.

The input of each weighting operator is connected to the output of the processing unit created for the vertex at the head of the edge for which the weighting operator stands. The output of each weighting operator is connected to an input of the processing unit created for the vertex at the tail of the edge.

In some embodiments the sigmoid function of the processing unit is the logistic function

[Math 11]

$$S(E) = \frac{1}{1 + 2^{-E}}$$

In some embodiments a value other than 2 is used as the base of the logarithm and exponentiation. In such cases any positive value can be used but has to be applied consistently in all logarithm and exponentiation operations during the computations.

In some embodiments, the bias value b is defined by:

[Math 12]

$$b = \log_2 \frac{P_0}{1 - P_0} + \sum_{i=1}^{n} \log_2 \frac{1 - P_i}{1 - \frac{Q_i}{n_i}}$$

wherein $P_0$ is the prior probability of the component or sensor mapped to the vertex being in the error status; n is the number of outgoing edges in the vertex associated with the processing unit; $P_i$ is the propagation probability of the error via the ith outgoing edge of the vertex; $Q_i$ is the prior probability of an error being present at the component mapped to the vertex at the head of the ith outgoing edge of the vertex associated with the processing unit; $n_i$ is the number of incoming edges at the vertex at the ith outgoing edge.

The constant weight parameter is based on the probability that there is no prior error present at the component mapped to the vertex at the head of the ith outgoing edge or an error propagates via the ith outgoing edge of the vertex reduced by the probability that there an error present at the component mapped to the vertex at the head of the ith outgoing edge or that the error does not propagate via the ith outgoing edge of the vertex.

In some embodiments, the constant weight parameter is defined by:

[Math 13]

$$w_i = \log_2 \frac{P_i \cdot \left(1 - \frac{Q_i}{n_i}\right)}{(1 - P_i) \cdot \frac{Q_i}{n_i}}$$

wherein the meanings of $P_i$, $Q_i$ and $n_i$ are as the same as in the above example provided for a bias value calculation.

The prior probability of a component being in the error status can be determined from rules defined by domain experts and knowledge extracted from e.g. reliability statistics of the component. For example, such a rule may say "the probability of an error being present at a network switch of type X is 0.1%". The prior probability a sensor being in the error status is determined from the odds-assignment rules explained below.

Hence, training or learning procedure of the neural network is not performed. This is especially the case as there is not enough data to learn a computer network failure as such events are very rare, but nonetheless outermost critical when they occur.

The error messages issued by the sensors are converted so that they can serve as input to the neural network. The conversion is a step comprised by the analysis of the error messages according to the method.

In some examples, during the conversion, the possibility that some error messages are missing is considered. An error messages is said to be missing if a sensor that should issue an error message does not respond to the error (i.e. it is in a trouble situation and in the silence status). This could be the case if the sensor itself or the interface of the network component to the sensor is deficient.

The conversion process also considers the possibility of spurious error messages, i.e. the chance that a sensor may produce error messages even if none of the components monitored by the sensor is actually in an erroneous state (i.e. the sensor alerting in a calm situation).

The possibility of missing or spurious error messages is considered by applying odds-assignment rules that define the odds of the sensor actually being in the trouble state (i) when an error message was issued (i.e. the odds-at-alerting) and (ii) when an error message was not issued (i.e. the odds-at-silence). Such a rule can say, for example, that "at a sensor monitoring an end-to-end network connection by means of heart-beat messages the presence of an error message about missing heartbeats means that the odds for an actual break-down of the connectivity on the monitored path is 50:1, while the absence of the error message has to be translated to an odds of 1:10".

The odds-assignment rules are determined by at least one of (i) experiments and (ii) expert knowledge. To provide an example, a hardware sensor or a software error handler is tested by deliberately caused failures of a component so as to test its reliability - especially in terms of the relation of the number of detected errors to the number of errors that were actually present. The so evaluated numbers are then, for example, extrapolated to a plurality of sensors. Also expert knowledge obtained from previous system faults or theoretical considerations might be used to determine the probability that a sensor issues an error message in case of an error actually happening.

The bias value of each sum operator (or processing unit) representing a sensor is, for example, set to the logarithm of the odds of an error being present at the sensor. The odds value of which the logarithm is taken is determined by the odds-assignment rule associated with the sensor and by the presence or absence of error messages from the sensor. That is, when the sensor reports no errors, then an odds-at-silence value of the rule is used, whereas when the sensor reports errors, then an odds-at-alerting value of the rule is used.

After constructing the network of computational operators comprising sum operators, sigmoid operators, or the neural network from the error propagation model in the way described above, the network of operators or neural network is initialized by setting the bias values of the operators representing the sensors according to the error messages reported by the monitoring system, and the computations defined by the network are carried out: the operators are evaluated according to a reverse topological order of the error propagation graph.

In some embodiments, whenever the monitoring system produces a new error message or revokes an existing one, the bias value of the corresponding sum operator is updated and the changes induced by the update are rippled through the network of computational operators.

When the computations prescribed by the network of computational operators are completed, an estimation of the marginal probability of an error being present at each component of the computer network can be obtained.

If an embodiment maps the vertices of the error propagation model to sum operators hence the embodiment in which a network of operators is used, then the output of the sum operator is an estimation of the logarithm of the odds of an error being present in the component represented by the vertex. Thus the estimation of the marginal probability of an error being present at the component represented by a vertex is

[Math 14]

$$P(error\ in\ component) = \frac{1}{1 + 2^{-E}}$$

where E is the output of the sum operator.

If the embodiment maps the vertices of the error propagation model to processing units (the neural network embodiment), then the output of the processing unit in itself is the estimation of the marginal probability of an error being present at the vertex.

The method further comprises determining probable root-cause fault candidates by the analysis.

In some embodiments, the values of the processing units are sorted by descending output values and displayed, the processing units with the highest output values being the candidates for the root cause.

The vertices are, for example, sorted by the estimation of marginal probability of an error being present (omitting the vertices representing sensors) and the name or identifier of the components with the n highest probability of error are displayed to the operator as the candidates for the root cause.

In some embodiments the diagnostic hints are given to the operator in the form of a graphical display of the by error probability top n vertices of the error propagation model and their connecting edges, showing the dependency relationships among the components mapped to the vertices. The probability of an error being present at a component is reflected by a color code or color-intensity code. The vertex illustrated in red color is then, for example, a good pointer to the root cause.

In some embodiments the components the failures of which cannot be explained by the failure of other components are identified as root-cause candidates. The components such that their marginal probability of containing an error is above a given threshold while the marginal error probability of the components they depend on (as per the error propagation model) is under the threshold, are output on a display. The display could, for example, show the underlying error-propagation paths and highlight those nodes of the graph at which the root cause is most probable located.

In some embodiments the outputting of the determined candidates for the root cause causes a network operator to start an error handler operator, inspect the network component identified as a candidate for the root cause, reboot or exchange the network component, or initiate a failover function, e.g. a failover to a corresponding network component that is, for example, in standby.

According to a second aspect, a computer network is provided. The computer network comprises at least two network components, a monitoring system for identifying errors in the computer network and an inference engine for determining a root cause of the errors in a computer network, the inference engine being programmed to: create an error-propagation model, which is based on interdependencies of a plurality of system components of the computer network; map the error-propagation model to a neural network or to a network of computational operators comprising sum operators and sigmoid operators; receive a plurality of error messages generated by a monitoring system indicative of the fault; analyze the error messages based on the underlying error-propagation model using the neural network or the network of computational operators comprising sum operators and sigmoid operators, wherein the probability that an error actually propagates to a dependent network component from other network components the dependent network component depends on and the probability that the monitoring system actually detects the error and issues error messages are considered in the analysis the probability that an error propagates to a dependent network component from other network components the dependent network component being determined by at least one of (i) experiments and (ii) expert knowledge; determine, by the analysis, probable root-cause fault candidates; output the determined candidates for the root cause.

Furthermore, the computer network comprises an inference engine, which is programmed to perform any of the previously described varieties of the method of detecting a root cause of a fault in a computer network.

Exemplary embodiments of the invention are now described, also with reference to the accompanying drawings, wherein

[Fig.1] is a schematic overview of an error-propagation model for a computer network in the form of an error-propagation graph,

[Fig.2] schematically illustrates the construction of a parametrized neural network or network of operators comprising sum operators and sigmoid operators, from expert knowledge, reliability statistics, information obtained through experiments and topology information,

[Fig.3] schematically illustrates the step of converting an error propagation graph into a network of operators comprising sum operators and sigmoid operators, with the vertices of the error-propagation graph converted to sum operators and edges converted to sigmoid operators,

[Fig.4] schematically illustrates the step of converting an error propagation graph into a neural network with the vertices of the error-propagation graph converted to processing units and edges converted to weighting operators,

[Fig. 5] schematically illustrates a flow diagram of an implementation of the method of determining a root cause of a failure in a computer network, showing the steps of constructing the neural network or network of operators comprising sum operators and sigmoid operators, and the steps of using it for root cause analysis.

The drawings and the description of the drawings are of examples of the invention , which is defined by the appended claims. Like reference signs refer to like elements throughout the following description of embodiments.

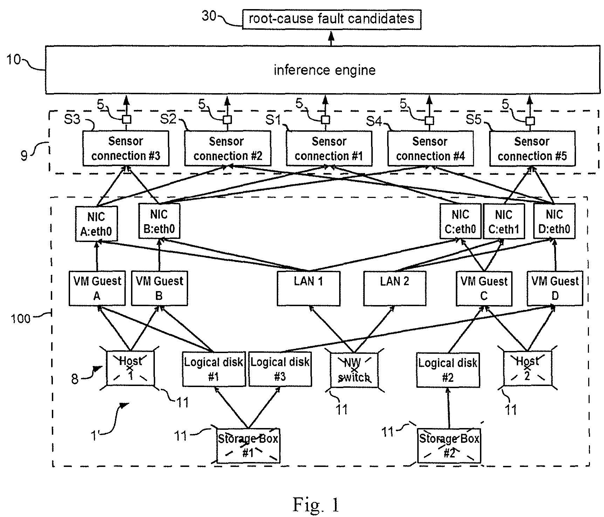

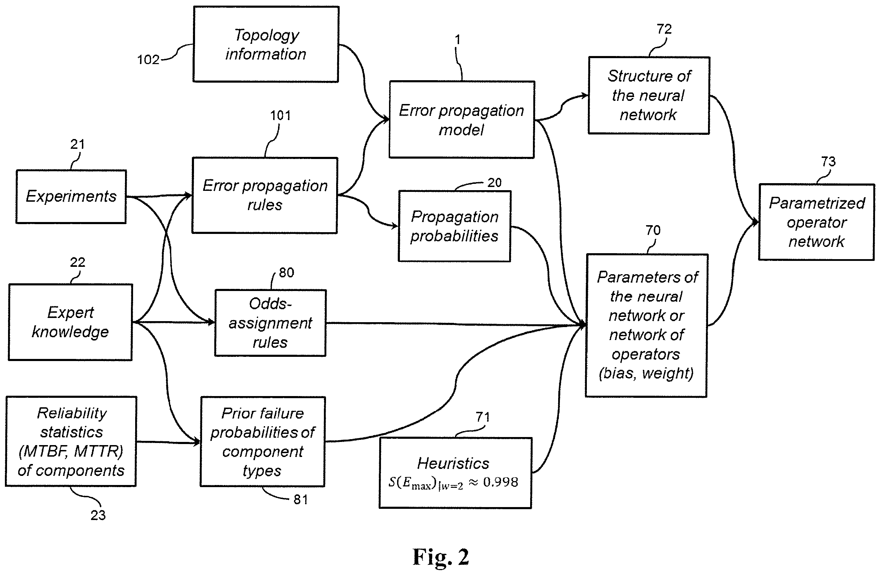

A schematic overview of an error-propagation model for a computer network 100 is given by Fig. 1. The error-propagation model 1 of Fig. 2 is realized as an error-propagation graph 1'. The graph 1' is a directed graph indicating the direction of the health status implications in the expert rules (the rules specify dependencies between pairs of components in terms of the conditional probability of an error present in the component at the head of the arrow on the condition that an error is actually present in the component at the tail of the arrow). A potential embodiment of sensors S1, S2, S3, S4, S5 could be monitors implemented over the TCP connections between pairs of the VM Guests; an error message would be generated when the monitor detects that the send-buffer of a connection is full or the rate of retransmits exceed a threshold; alternatively, heart-beat messages can be sent over the connections and the monitor be made to issue an error message when the number of received heartbeats per time interval drops below a threshold. We demonstrate the workings of the error-propagation graph in several failure scenarios: in scenario $\alpha$ a fault is activated in "Storage Box #1"; in scenario $\beta$ an error occurs in the "Storage Box #2"; in scenario $\gamma$ the root cause is in "Host 1"; in scenario $\delta$ "Host 2" fails; while in scenario $\varepsilon$ the "NW switch" is broken.

In scenario $\alpha$ the error 11 of "Storage Box #1" propagates to "Logical disk #1" and "Logical disk #3". The thereby induced error of "Logical disk #1" propagates to the virtual machines "VM Guest A" and "VM Guest B". Due to this error "VM Guest A" and "VM Guest B" both suffer an error that reaches the network interface cards "NIC A:eth0", "NIC B:eth0". The error induced in "Logical disk #3" propagates to "VM Guest D" and from there to interface card "NIC D:eth0". Because of the errors appearing on the interface cards all of the S1, S2, S3, S4, S5 sensors generate error messages.

In scenario $\beta$ the error 11 of "Storage Box 2" induces an error in the "Logical disk #2". This error 11 propagates to the virtual machine "VM Guest C". The error in "VM Guest C" propagate to the modules "NIC C:eth0", "NIC C:eth1". The errors in these network cards will be detected by sensors S1 and S5.

In scenario $\gamma$ the host "Host 1" suffers an error 11. The error 11 of "Host 1" propagates through the virtual machines "VM Guest A" and "VM Guest B" to the network cards "NIC A:eth0" and "NIC B:eth0", causing S2, S3, S1 and S4 to send error messages to the inference engine.

In scenario δ the error 11 of "Host 2" propagates through the virtual machines "VM Guest C" and "VM Guest D" to the network cards "NIC C:eth0" and "NIC C:eth1" and "NIC D:eth0", causing error messages being sent from S1, S2, S4 and S5.

In scenario ε the error 11 of the "NW switch" propagates through two networks, "LAN 1" and "LAN 2". The errors 11 in "LAN 1" and "LAN 2" propagate to the network interface cards (NIC) "NIC A:eth0", "NIC B:eth0", "NIC C:eth0", "NIC C:eth1" "NIC D:eth0". All of the S1, S2, S3, S4, S5 sensors generate error messages.

The sensors convey the error signals to the inference engine 10, which is used to determine the root cause of the error messages.

The task of the inference engine is to infer the root causes of the computer network errors in the various scenarios, namely the errors 11 of "Host 1", "NW switch", "host 2" and "Storage Box #1" and "Storage Box #2", from the errors received at the sensor connections S1 to S5.

The information flow describing the method of constructing the inference engine 10 for the purpose of root-cause analysis in a computer network 100 is described in **Fig. 2.**

Experiments 21 or expert knowledge 22 or both are used to obtain error propagation rules 101 specifying the error propagation probabilities 20 between pairs of components or component-sensor pairs, referring to the kinds of the involved components or sensors and their topological relationships.

Examples of such error propagation rules are:

*"Any sensor monitoring an end-to-end network connectivity will be in an error state with 95% probability if any of the network devices involved on the end-to-end path is in error."*
*"If there is an error in a disk array, then with 10% probability there is an error in each of the logical volumes residing on the disk array."*

The error propagation rules 101 are applied to topology information 102.

Examples of topology information are:

*"VM Guest A runs on Host 1"*

*"Storage Box #1 provides Logical disk #1"*

The application of the propagation rules 101 to the topology information 102 results in an error propagation model 1 such as seen in Fig. 1.

The error propagation rules 101 also determine the propagation probabilities of errors 20 between components 8 and from components 8 to sensors S1, S2, S3, S4, S5.

Experiments 21 or expert knowledge 22 or both are used to obtain, for each type of sensor, the odds assignment rules 80, i.e. the odds that a sensor of the given type is in a trouble situation (that is, the odds that the sensor observes that at least one of its monitored components is not working properly) when the sensor is alerting (odds-at-alerting) and when it is in silence (odds-at-silence).

Expert knowledge and reliability statistics are used to determine prior failure probabilities 81 of the various types of components comprising the computer network 100.

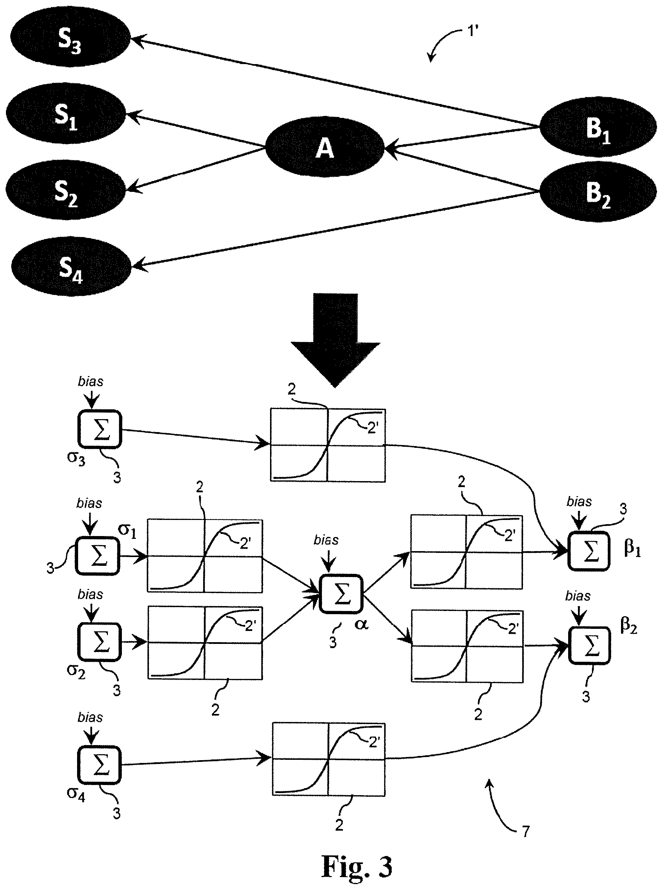

In an embodiment using a network of operators 72 sum operators 3 and sigmoid operators 2 or weight operators 13, the network of operators 72 is constructed from the error propagation model 1. As the first step of the process, a sum operator for each vertex and a sigmoid operator for each edge of the error-propagation graph 1' are created. Consider, for example the error-propagation graph of **Fig. 3,** indicating that an error from component $B_1$ may propagate to sensor $S_3$ and to component A; an error from component $B_2$ may propagate to sensor $S_4$ and to component A; and the error from component A may propagate to sensors $S_1$ and $S_2$. This structure is mapped to a network of computational operators as follows:

For each of the vertices $B_1$, $B_2$, A, $S_1$, $S_2$, $S_3$ and $S_4$ a sum operator 3 (called $\beta_1$, $\beta_2$, $\alpha$, $\sigma_1$, $\sigma_2$, $\sigma_3$ and $\sigma_4$ respectively) is created. For each of the edges an sigmoid operator 2 is created. The sum operators $\sigma_1$, $\sigma_2$, $\sigma_3$ and $\sigma_4$ representing the sensors have no inputs. The output of each is connected to the input of an sigmoid operator 2. The outputs of the sigmoid operators 2 connected to $\sigma_1$ and $\sigma_2$ are each connected to an input of the sum operator $\alpha$. The outputs of the sigmoid operators 2 connected to $\sigma_3$ and $\sigma_4$ are connected to an input of the sum operators $\beta_1$ and $\beta_2$ respectively. The output of the sum operator $\alpha$ is connected to the inputs of the sigmoid operators 2 created for the edges incoming into A. The output of each of these sigmoid operators 2 is connected to an input of the sum operators $\beta_1$ and $\beta_2$. The parameters of the network of operators 70 (i.e. the weight parameters of the sigmoid operators 2 and bias 4 values) are determined from the error propagation graph 1' of the error propagation model 1, the error propagation probabilities 20, the odds-assignment rules 80 and heuristics 71.

For an example of determining the values of the weight parameter of the sigmoid operators 2, consider the simple error propagation graph 1' of Fig. 3 and the network of operators 7 it is converted to. If the error 11 propagates from component A to the sensors $S_1$ and $S_2$ with the same propagation probability 20 of $P_A$ along the $n_A = 2$ edges outgoing from A, then the $w_A$ weight parameters of the sigmoid operator 2 connecting $\sigma_1$ to $\alpha$ and $\sigma_2$ to $\alpha$ have to be chosen (with $n_A = 2$ outgoing edges from A) as

[Math 15]

$$w_{S_1,A} = w_{S_2,A} = 2 \cdot \frac{E_{max}}{n_A \cdot P_A} = \frac{E_{max}}{P_A}$$

The weight parameters of the sigmoid operators 2 connecting $\alpha$ to $\beta_1$ and $\sigma_3$ to $\beta_1$ (with

[Math 16]

$$n_{B_1} = 2$$

outgoing edges from $B_1$ and

[Math 17]

$$P_{B_1}$$

error propagation probability from B1 to each of A and $S_3$) have to be chosen as

[Math 18]

$$w_{A,B_1} = w_{S_3,B_1} = 2 \cdot \frac{E_{max}}{n_{B_1} \cdot P_{B_1}} = \frac{E_{max}}{P_{B_1}}$$

and the weight parameters of the sigmoid operators 2 connecting $\alpha$ to $\beta_2$ and $\sigma_4$ to $\beta_2$ (with

[Math 19]

$$n_{B_2} = 2$$

outgoing edges from $B_2$ and [0135]

[Math 20]

$$P_{B_2}$$

error propagation probability from $B_2$ to each of A and $S_4$) as [0137]

[Math 21]

$$w_{A,B_2} = w_{S_4,B_2} = 2 \cdot \frac{E_{max}}{n_{B_2} \cdot P_{B_2}} = \frac{E_{max}}{P_{B_2}}$$

where [0139]

[Math 22]

$$P_A, P_{B_1} \text{ and } P_{B_2}$$

are the propagation probabilities 20 determined by the error propagation rules 101. The numbers

[Math 23]

$$n_A, n_{B_1} \text{ and } n_{B_2}$$

are the number of outgoing edges of vertices A, $B_1$ and $B_2$ in the error propagation model 1. $E_{max}$ is chosen heuristically 71 so that

[Math 24]

$$S(E_{\max})_{|w=2} \approx 0.998$$

The bias 4 values of the sum operators $\sigma_1$, $\sigma_2$, $\sigma_3$ and $\sigma_4$ are set in accordance to the odds-assignment rules 80 depending on the alerting state of the sensors $S_1$, $S_2$, $S_3$ and $S_4$. The bias value of the sum operator $\alpha$ is set to

[Math 25]

$$b_A = -E_{\max} - \sum_{i=1}^{2} e_{A,i,FF}$$

Where

[Math 26]

$$e_{A,i,FF}$$

is the $i$th input of the sum operator $\alpha$ when the alerting state of each of the sensors $S_1$, $S_2$, $S_3$ and $S_4$ is silence. Similarly, the bias values of B1 and B2 are determined as

[Math 27]

$$b_{B_1} = -E_{\max} - \sum_{i=1}^{2} e_{B_1,i,FF}$$

[Math 28]

$$b_{B_2} = -E_{\max} - \sum_{i=1}^{2} e_{B_2,i,FF}$$

where

[Math 29]

$$e_{B_1,i,FF}$$

and

[Math 30]

$$e_{B_2,i,FF}$$

are the $i$th inputs of the sum operators to $\beta_1$ and $\beta_2$ when the alerting state of both of the sensors $S_1$, $S_2$, $S_3$ and $S_4$ is silence. (The bias values are calculated in a reverse topological order of the error propagation graph 1', that is,

[Math 31]

$$b_{B_1} \text{ and } b_{B_2}$$

are calculated after $b_A$ as

[Math 32]

$$e_{B_1,i,FF}$$

and

[Math 33]

$$e_{B_2,i,FF}$$

depend on $b_A$.)

In an embodiment using a neural network 72, the neural network is constructed from the error propagation model 1.

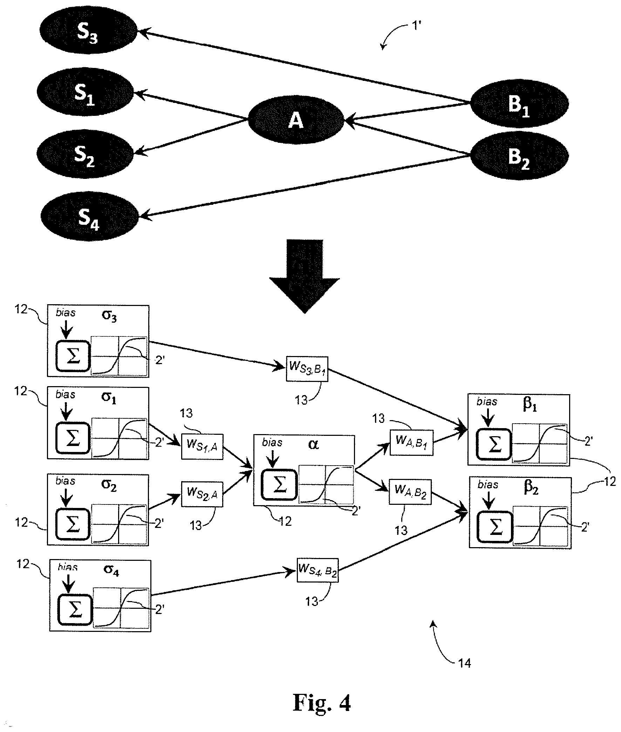

As the first step of the process, a processing unit for each vertex and a weight operator for each edge of the error-propagation graph 1' are created. Consider, for example the error-propagation graph of Fig. 4, indicating that an error from component $B_1$ may propagate to sensor $S_4$ and to component A; an error from component $B_2$ may propagate to sensor $S_3$ and to component A; and the error from component may propagate to sensors $S_1$ and $S_2$. This structure is mapped to a neural network as follows:

For each of the vertices $B_1$, $B_2$, A, $S_1$, $S_2$, $S_3$ and $S_4$ a processing unit 12 (called $\beta_1$, $\beta_2$, $\alpha$, $\sigma_1$, $\sigma_2$, $\sigma_3$ and $\sigma_4$ respectively) is created. For each of the edges a weight operator 13 is created. The processing units $\sigma_1$, $\sigma_2$, $\sigma_3$ and $\sigma_4$ representing the sensors have no inputs. The output of each is connected to the input of a weighting operator 13. The outputs of the weighting operators connected to $\sigma_1$ and $\sigma_2$, are each connected to an input of the processing unit $\alpha$. The outputs of the weighting operators 13 connected to $\sigma_3$ and $\sigma_4$ are connected to an input of the processing units $\beta_1$ and $\beta_2$ respectively. The output of the processing unit $\alpha$ is connected to the inputs of the weighting operators 13 created for the edges incoming into A. The output of each of these weighting operators 13 is connected to an input of the processing units $\beta_1$ and $\beta_2$.

The parameters of the neural network 70 (i.e. its weights and bias 4 values) are determined from the error propagation graph 1' of the error propagation model 1, the error propagation probabilities 20, the odds-assignment rules 80 and the prior failure probabilities of the various component types 81.

For an example of determining the values of the weight parameter of the weighting operators 13, consider the simple error propagation graph 1' of Fig. 4 and the neural network 14 it is converted to. We use the following notations for this example:

[Math 34]

$$P_{A,S_1} , P_{A,S_2} , P_{B_1,S_3}, P_{B_1,A}, P_{B_2,S_4} \text{ and } P_{B_2,A}$$

are the error propagation probabilities from A to $S_1$, from A to $S_2$, from $B_1$ to $S_3$, from $B_1$ to A, from $B_2$ to $S_4$ and from $B_2$ to A.

| [Math 35]

$$Q_{S_1}, Q_{S_2}, Q_{S_3} \text{ and } Q_{S_4}$$

are the prior probabilities of $S_1$, $S_2$, $S_3$ and $S_4$ erroneously observing a trouble situation even if all monitored components are working properly (determined from expert knowledge 22).

[Math 36]

$$Q_A, Q_{B_1} \text{ and } Q_{B_2}$$

are the prior probability 81 of components A, $B_1$ and $B_2$ being in the error status (determined from reliability statistics 23 such as mean time between failures and mean time to recover or expert knowledge 22).

With these notations the weights of the neural network are

[Math 37]

$$w_{S_1,A} = \log_2 \frac{P_{A,S_1} \cdot \left(1 - Q_{S_1}\right)}{\left(1 - P_{A,S_1}\right) \cdot Q_{S_1}}$$

[Math 38]

$$w_{S_2,A} = \log_2 \frac{P_{A,S_2} \cdot \left(1 - Q_{S_2}\right)}{\left(1 - P_{A,S_2}\right) \cdot Q_{S_2}}$$

[Math 39]

$$w_{A,B_1} = \log_2 \frac{P_{B_1,A} \cdot \left(1 - \frac{Q_A}{2}\right)}{\left(1 - P_{B_1,A}\right) \cdot \frac{Q_A}{2}}$$

[Math 40]

$$w_{S_3,B_1} = \log_2 \frac{P_{B_1,S_3} \cdot \left(1 - Q_{S_3}\right)}{\left(1 - P_{B_1,S_3}\right) \cdot Q_{S_3}}$$

[Math 41]

$$w_{A,B_2} = \log_2 \frac{P_{B_2,A} \cdot \left(1 - \frac{Q_A}{2}\right)}{\left(1 - P_{B_2,A}\right) \cdot \frac{Q_A}{2}}$$

[Math 42]

$$w_{S_4,B_2} = \log_2 \frac{P_{B_2,S_4} \cdot \left(1 - Q_{S_4}\right)}{\left(1 - P_{B_2,S_4}\right) \cdot Q_{S_4}}$$

The bias 4 values of the sum operators $\sigma_1$, $\sigma_2$, $\sigma_3$ and $\sigma_4$ are set in accordance to the odds-assignment rules 80 depending on the alerting state of the sensors $S_1$, $S_2$, $S_3$ and $S_4$. The bias 4 values of the processing units $\alpha$, $\beta_1$ and $\beta_2$ are set as

[Math 43]

$$b_A = \log_2 \frac{Q_A}{1 - Q_A} + \sum_{i=1}^{n} \log_2 \frac{1 - P_{A,S_i}}{1 - Q_{S_i}}$$

[Math 44]

$$b_{B_1} = \log_2 \frac{Q_{B_1}}{1 - Q_{B_1}} + \log_2 \frac{1 - P_{B_1,A}}{1 - \frac{Q_A}{2}} + \log_2 \frac{1 - P_{B_1,S_3}}{1 - Q_{S_3}}$$

[Math 45]

$$b_{B_2} = \log_2 \frac{Q_{B_2}}{1 - Q_{B_2}} + \log_2 \frac{1 - P_{B_2,A}}{1 - \frac{Q_A}{2}} + \log_2 \frac{1 - P_{B_2,S_4}}{1 - Q_{S_4}}$$

By computing the structure 72 and the parameters 70 of the neural network or network of operators a parametrized operator network 73 is obtained.

The parametrized operator network 73 is used for root cause analysis in the following way.

When the monitoring system 9 receives error messages from a plurality of sensors, the bias of the operators mapped to the issuing sensors is set to the odds-at-alerting value determined by the odds-assignment 80 rules applicable for the types of the issuing sensors, and the operators taking directly or indirectly input from the operators mapped to the issuing sensors are re-evaluated in a reverse topological order of the error propagation graph 1'. This way the changes induced by the reception of the error messages are cascaded through the whole operator network.

After the propagation of the changes through the operator network, an estimation of the marginal probabilities of errors being present at the network components 8 is obtained.

If the embodiment maps the vertices of the error propagation graph 1' to sum operators, then the estimation is obtained by the

[Math 46]

$$P(error\ in\ component) = \frac{1}{1 + 2^{-E}}$$

formula, wherein E is the output of the sum operator.

If the embodiment maps the vertices of the error propagation model to processing units (the neural network embodiment of Fig. 4), then the output of the processing unit is used as an estimation of the marginal probability of error in the component mapped to the unit.

Once the estimations of the marginal probability of errors in the components are known, the components are ranked by their estimations and the top ranking ones are output as root cause candidates of the error messages.

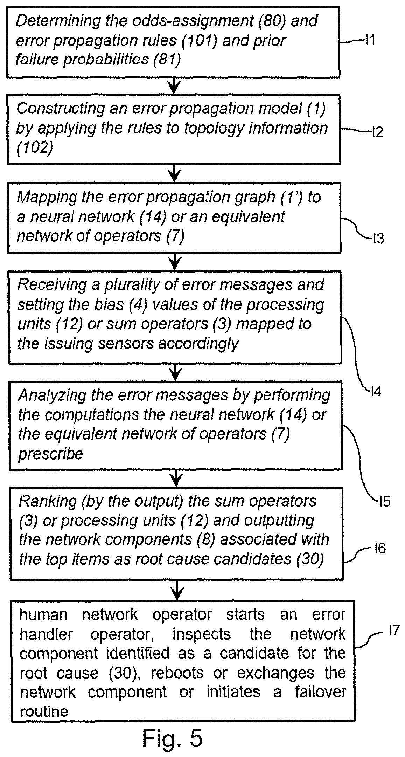

A schematic flow diagram of an implementation of the method of determining a root cause of errors in a computer network is illustrated by Fig. 5.

In a first activity I1, the odds-assignment and error propagation rules and the prior failure probabilities of the various types of network components 8 are identified by experts 22 or by experiments 21.

In a second activity 12, the error propagation model 1 is constructed by applying the rules to topology information about the computer network 100.

Then the error-propagation graph 1' of the error propagation model 1 is mapped to a neural network 14 or network of computational operators 7 comprising sum operators (3) and sigmoid operators (2) in an activity 13.

In the next activity I4 a plurality of error messages is received by the monitoring system 9 and the bias 4 values of the operators mapped to the issuing sensors are set to odds-at-alerting value as prescribed by the odds-assignment rules.

Thereafter the computations defined by the neural network 14 or the network of operators 7 are executed in activity I5.

In a sixth activity 16, the sum operators 3 or processing units 12 are ranked by their output and the network components 8 associated with the top items are output as root cause candidates 30.

In a seventh activity I7 a human network operator starts an error handler operator, inspects the network component identified as a candidate for the root cause (30), reboots or exchanges the network component, or initiates a failover routine.

**Claims**

1. A method of determining a root cause (11) of a plurality of simultaneous errors in a computer network (100), the method comprising:

   creating an error-propagation model, which is based on interdependencies of a plurality of network components (8) of the computer network;
   mapping the error-propagation model (1) to a neural network (7) );
   receiving a plurality of error messages (5) generated by a monitoring system (9) indicative of the activated fault;
   analyzing the error messages (5) based on the underlying error-propagation model (1) using the neural network (7),

wherein the error-propagation model is a directed acyclic graph constructed from the dependency relationship of the network components and sensors, wherein the vertices of the graph are sensors and system components differentiable by the errors they imply in other system components,

wherein the directed edges of the error propagation model represent the propagation probability of an error from the tail component represented by the tail vertex to the head component represented by the head vertex, the propagation probability being determined by at least one of (i) experiments (21) and (ii) expert knowledge (22);

determining, by the analysis, probable root-cause fault candidates (30);
outputting the determined candidates for the root cause (30)

wherein the error-propagation model (1), is built from topology information (102) of the computer network (100) and error propagation rules (101) applicable to the computer network components and wherein the error-propagation model (1) comprises a error-propagation graph (1'), being a directed graph comprising vertices and directed edges, and the monitoring system (9) comprises a plurality of sensors (S1 ...S5), wherein each network component (8) and each sensor (S1...S5) of the monitoring system (9) are represented by a vertex of the error-propagation graph (1') and each directed edge of the graph indicates that the presence of an error in the network component (8) represented by a vertex at the tail of the edge implies the presence of an error or the violation of the conditions monitored by a sensor in another network component (8) with a certain propagation probability, wherein the network component (8) or sensor is represented by a vertex at the head of the edge,

wherein the neural network is constructed by creating a processing unit (12) for each vertex and creating a weighting operator (13) for each edge of the error-propagation model and connecting the input of each weighting operator (13) to the output of the processing unit (12) created for the vertex at the head of the edge for which the weighting operator (13) stands, and connecting the output of each weighting operator (13) to an input of the processing unit (12) created for the vertex at the tail of the edge, wherein the processing unit (12) works by adding up the real numbers presented to its inputs plus a bias value and applying to the sum a sigmoid function (2') such that the difference between the upper and lower bounds of the sigmoid function (2') is 1 and presenting the result to its output and wherein the weighting operator (13) works by multiplying the real number presented on its input with a constant weight parameter and presenting the result on its output,

wherein the constant weight parameter is based on the probability that there is no prior error present at the component mapped to the vertex at the head of the $i$th outgoing edge or an error propagates via the $i$th outgoing edge of the vertex reduced by the probability that there an error present at the component mapped to the vertex at the head of the $i$th outgoing edge or that the error does not propagate via the $i$th outgoing edge of the vertex.

2. The method of claim 1, wherein parameters of the neural network are determined based on (i) the probability (20) that the error actually propagates to a dependent component or sensor and an error message (5) is actually issued by a sensor of the monitoring system (9) in the case of an error being present in a network component (8).

3. The method of any one of claims 1 or 2, wherein the neural network (7) receives error messages (5) from the monitoring system (9) translated to real numbers as an input, wherein the error messages (5) are issued by the sensors (S1... S5).

4. The method of any of the preceding claims, wherein the sigmoid function (2') of the processing unit has the particular form of a logistic function with the output of the summer as input.

5. The method of claim any of the preceding claims, wherein the bias value b is defined by:

$$b = \log_2 \frac{P_0}{1 - P_0} + \sum_{i=1}^{n} \log_2 \frac{1 - P_i}{1 - \frac{Q_i}{n_i}}$$

wherein Po is the prior probability of the component or sensor mapped to the vertex being in the error status; n is the number of outgoing edges in the vertex associated with the processing unit; $P_i$ is the propagation probability of the error via the ith outgoing edge of the vertex; $Q_i$ is the prior probability of an error being present at the component mapped to the vertex at the head of the ith outgoing edge of the vertex associated with the processing unit; $n_i$ is the number of incoming edges at the vertex at the ith outgoing edge.

6. The method of any one of the preceding claims, wherein the constant weight parameter is defined by:

$$w_i = \log_2 \frac{P_i \cdot \left(1 - \frac{Q_i}{n_i}\right)}{(1 - P_i) \cdot \frac{Q_i}{n_i}}$$

wherein the meanings of $P_i$, $Q_i$ and $n_i$ are defined as claim 12.

7. The method of any one of claims 1 to 6, wherein the values of the processing units (12) are sorted by descending output values and displayed, the processing units (12) with the highest output values being the candidates for the root cause (30) and wherein the outputting of the determined candidates for the root cause (30) causes a network operator to start an error handler operator, inspect the network component identified as a candidate for the root cause (30), reboot or exchange the network component, or initiate a failover function.

8. A method of determining a root cause (11) of a plurality of simultaneous errors in a computer network (100), the method comprising:

creating an error-propagation model, which is based on interdependencies of a plurality of network components (8) of the computer network;
mapping the error-propagation model (1) to a network of computational operators (14) comprising sum operators (3) and sigmoid operators (2);
receiving a plurality of error messages (5) generated by a monitoring system (9) indicative of the activated fault;
analyzing the error messages (5) based on the underlying error-propagation model (1) using the neural network (7),

wherein the error-propagation model is a directed acyclic graph constructed from the dependency relationship of the network components and sensors, wherein the vertices of the graph are sensors and system components differentiable by the errors they imply in other system components,
wherein the directed edges of the error propagation model represent the propagation probability of an error from the tail component represented by the tail vertex to the head component represented by the head vertex, the propagation probability being determined by at least one of (i) experiments (21) and (ii) expert knowledge (22);

determining, by the analysis, probable root-cause fault candidates (30);
outputting the determined candidates for the root cause (30),

wherein the error-propagation model (1), is built from topology information (102) of the computer network (100) and error propagation rules (101) applicable to the computer network components and wherein the error-propagation model (1) comprises a error-propagation graph (1'), being a directed graph comprising vertices and directed edges, and the monitoring system (9) comprises a plurality of sensors (S1...S5), wherein each network component (8) and each sensor (S1...S5) of the monitoring system (9) are represented by a vertex of the error-propagation graph (1') and each directed edge of the graph indicates that the presence of an error in the network component (8) represented by a vertex at the tail of the edge implies the presence of an error or the violation of the conditions monitored by a sensor in another network component (8) with a certain propagation probability, wherein the network component (8) or sensor is represented by a vertex at the head of the edge,
wherein the sigmoid operators (2) couple an input potential to an output potential by a monotonously rising sigmoid function (2'),
wherein the network of operators comprising sum operators (3) and sigmoid operators (2), is constructed by creating a sum operator (3) for each vertex and creating an sigmoid operator (2) for each edge of the error-propagation model and connecting the input of each sigmoid operator (2) to an output of the sum operator (3) created for the vertex at the head of the edge for which the sigmoid operator (2) stands, and connecting the output of each sigmoid operator (2) to an input of the sum operator (3) created for the vertex at the tail of the edge, wherein the sum operator (3) works by adding up real numbers presented to its inputs plus a bias value and presenting the result to its output and wherein the sigmoid operator (2) works by applying a sigmoid function (2') to the real number presented on its input and presenting the result on the output of the sigmoid operator (2),

wherein for an error propagation model defining the same propagation probability for each outgoing edge of a given vertex, the bias and the sigmoid function (2') are chosen so that in an error-free state of the computer network, the activation function is at its lower bound and swings from its lower bound to its upper bound already after activation of the number of inputs that can be expected from the propagation probabilities of the outgoing edges.

9. The method of claim 8, wherein for an error propagation model defining the same propagation probability P for each outgoing edge of a given vertex and wherein the sigmoid function (2') is defined by

$$S(E) = \log_2 \frac{1 + 2^{-w/2-E}}{2^{-w/2} + 2^{-E}}$$

$$w = 2 \cdot \frac{E_{max}}{n \cdot P}$$

where n is the number of edges through which the error propagates wherein E is the input value of the sigmoid operator and wherein P is said propagation probability for each outgoing edge of a given vertex, and $E_{max}$ is a heuristic factor to scale the sigmoid function, set so that

$$S(E_{max})_{|w=2} \approx 0.998.$$

10. The method of any one of claims 8 or 9, wherein the bias value b is defined by:

$$b = -E_{max} - \sum_{i=1}^{n} e_{i,FF},$$

$e_{i,FF}$ is the $i$th input of the summer (3) under the condition that the computer network is error-free and the bias value of all the sum operators directly or indirectly feeding into the current one are set by this rule.

11. A computer network, the computer network comprising:

a monitoring system for identifying a fault in the computer network (100)
an inference engine (10) for determining a root cause (11) of a fault in a computer network, wherein determining the root cause (11) of the fault in the computer network involves creating an error-propagation model, which is based on interdependencies of a plurality of network components (8) of the computer network, the inference engine (10) being programmed to
map an error-propagation model (1) to a neural network model (2);
receive a plurality of error messages (5) generated by a monitoring system (9) indicative of the fault;
analyze the error messages (5) based on the underlying error-propagation model (1) using the neural network (7) wherein the error-propagation model is a directed acyclic graph constructed from the dependency relationship of the network components and sensors, wherein the vertices of the graph are sensors and system components differentiable by the errors they imply in other system components,
wherein the directed edges of the error propagation model represent the propagation probability of an error from the tail component represented by the tail vertex to the head component represented by the head vertex, the propagation probability being determined by at least one of (i) experiments (21) and (ii) expert knowledge (22);
determine, by the analysis, probable root-cause fault candidates (30);

output the determined candidates for the root cause (30),

wherein the error-propagation model (1), is built from topology information (102) of the computer network (100) and error propagation rules (101) applicable to the computer network components and wherein the error-propagation model (1) comprises a error-propagation graph (1'), being a directed graph comprising vertices and directed edges, and the monitoring system (9) comprises a plurality of sensors (S1 ...S5), wherein each network component (8) and each sensor (S1...S5) of the monitoring system (9) are represented by a vertex of the error-propagation graph (1') and each directed edge of the graph indicates that the presence of an error in the network component (8) represented by a vertex at the tail of the edge implies the presence of an error or the violation of the conditions monitored by a sensor in another network component (8) with a certain propagation probability, wherein the network component (8) or sensor is represented by a vertex at the head of the edge,

wherein the neural network is constructed by creating a processing unit (12) for each vertex and creating a weighting operator (13) for each edge of the error-propagation model and connecting the input of each weighting operator (13) to the output of the processing unit (12) created for the vertex at the head of the edge for which the weighting operator (13) stands, and connecting the output of each weighting operator (13) to an input of the processing unit (12) created for the vertex at the tail of the edge, wherein the processing unit (12) works by adding up the real numbers presented to its inputs plus a bias value and applying to the sum a sigmoid function (2') such that the difference between the upper and lower bounds of the sigmoid function (2') is 1 and presenting the result to its output and wherein the weighting operator (13) works by multiplying the real number presented on its input with a constant weight parameter and presenting the result on its output,

wherein the constant weight parameter is based on the probability that there is no prior error present at the component mapped to the vertex at the head of the $i$th outgoing edge or an error propagates via the $i$th outgoing edge of the vertex reduced by the probability that there an error present at the component mapped to the vertex at the head of the $i$th outgoing edge or that the error does not propagate via the $i$th outgoing edge of the vertex.

12. The computer network of claim 11, comprising an inference engine being programmed to perform any of the activities of claims 2 to 10.

13. A computer network, the computer network comprising:

a monitoring system for identifying a fault in the computer network (100)
an inference engine (10) for determining a root cause (11) of a fault in a computer network, wherein determining the root cause (11) of the fault in the computer network involves creating an error-propagation model, which is based on interdependencies of a plurality of network components (8) of the computer network, the inference engine (10) being programmed to
map an error-propagation model (1) to a network of computational operators (14) comprising sum operators (3) and sigmoid operators (2);
receive a plurality of error messages (5) generated by a monitoring system (9) indicative of the fault;
analyze the error messages (5) based on the underlying error-propagation model (1) using the network of operators (14) comprising sum operators (3) and sigmoid operators (2),
wherein the error-propagation model is a directed acyclic graph constructed from the dependency relationship of the network components and sensors, wherein the vertices of the graph are sensors and system components differentiable by the errors they imply in other system components,
wherein the directed edges of the error propagation model represent the propagation probability of an error from the tail component represented by the tail vertex to the head component represented by the head vertex, the propagation probability being determined by at least one of (i) experiments (21) and (ii) expert knowledge (22);
determine, by the analysis, probable root-cause fault candidates (30);
output the determined candidates for the root cause (30),

wherein the sigmoid operators (2) couple an input potential to an output potential by a monotonously rising sigmoid function (2'),
wherein the network of operators comprising sum operators (3) and sigmoid operators (2), is constructed by creating a sum operator (3) for each vertex and creating an sigmoid operator (2) for each edge of the error-propagation model and connecting the input of each sigmoid operator (2) to an output of the sum operator (3) created for the vertex at the head of the edge for which the sigmoid operator (2) stands, and connecting the output of each sigmoid operator (2) to an input of the sum operator (3) created for the vertex at the tail of the edge, wherein the sum operator (3) works by adding up real numbers presented to its inputs plus a bias value and presenting the result to its output and wherein the sigmoid operator (2) works by applying a sigmoid function (2') to the real number presented on its input and presenting the result on the output of the sigmoid operator (2),

wherein for an error propagation model defining the same propagation probability for each outgoing edge of a given vertex, the bias and the sigmoid function (2') are chosen so that in an error-free state of the computer network, the activation function is at its lower bound and swings from its lower bound to its upper bound already after activation of the number of inputs that can be expected from the propagation probabilities of the outgoing edges.

14. The computer network of claim 13, comprising an inference engine being programmed to perform any of the activities of claims 2 to 10.

**Patentansprüche**

1. Verfahren zum Feststellen einer gemeinsamen Ursache (11) von mehreren gleichzeitigen Fehlern in einem Computernetzwerk (100), wobei das Verfahren Folgendes umfasst:

Einrichten eines Modells der Fehlerfortpflanzung, das auf Wirkungszusammenhängen einer Anzahl Netzwerkkomponenten (8) des Computernetzwerks basiert;
Abbilden des Fehlerfortpflanzungsmodells (1) auf ein neuronales Netz (7);
Empfangen mehrerer Fehlernachrichten (5), die von einem Überwachungssystem (9) erzeugt werden und die den aktivierten Störfall anzeigen;
Auswerten der Fehlernachrichten (5) basierend auf dem zugrunde liegenden Fehlerfortpflanzungsmodell (1) unter Verwendung des neuronalen Netzes (7),
wobei das Fehlerfortpflanzungsmodell ein gerichteter azyklischer Graph ist, der aus den Abhängigkeitsverhältnissen der Komponenten und Sensoren des Netzwerks konstruiert ist, wobei die Knoten des Graphen Sensoren und Systemkomponenten sind, die durch die Fehler unterscheidbar sind, die sie in anderen Systemkomponenten bewirken,
wobei die gerichteten Kanten des Fehlerfortpflanzungsmodells die Fortpflanzungswahrscheinlichkeit eines Fehlers repräsentieren, von der Anfangskomponente, die durch den Anfangsknoten repräsentiert ist, zur Endkomponente, die durch den Endknoten repräsentiert ist, wobei die Fortpflanzungswahrscheinlichkeit durch wenigstens einen der Punkte (i) Experimente (21) und (ii) Expertenwissen (22) gegeben ist;
Ermitteln, durch die Auswertung, wahrscheinlicher Kandidaten (30) für die gemeinsame Ursache des Störfalls;
Ausgeben der ermittelten Kandidaten für die gemeinsame Ursache (30),
wobei das Fehlerfortpflanzungsmodell (1) aus Topologieinformation (102) über das Computernetzwerk (100) und Fehlerfortpflanzungsregeln (101), die für die Komponenten des Computernetzwerks gelten, gebildet ist und wobei das Fehlerfortpflanzungsmodell (1) einen Fehlerfortpflanzungsgraphen (1') umfasst, der ein gerichteter Graph ist, der Knoten und gerichtete Kanten umfasst, und wobei das Überwachungssystem (9) mehrere Sensoren (S1 ... S5) umfasst, wobei jede Netzwerkkomponente (8) und jeder Sensor (S1 ... S5) des Überwachungssystems (9) durch einen Knoten des Fehlerfortpflanzungsgraphen (1') repräsentiert sind und jede gerichtete Kante des Graphen anzeigt, dass das Auftreten eines Fehlers in der Netzwerkkomponente (8), die von einem Knoten am Anfang der Kante repräsentiert wird, das Auftreten eines Fehlers oder die Verletzung der von einem Sensor überwachten Bedingungen in einer anderen Netzwerkkomponente (8) mit einer bestimmten Fortpflanzungswahrscheinlichkeit bewirkt, wobei die Netzwerkkomponente (8) oder der Sensor durch einen Knoten am Ende der Kante repräsentiert sind,
wobei das neuronale Netz durch das Einrichten einer Verarbeitungseinheit (12) für jeden Knoten und das Einrichten eines Gewichtungsoperators (13) für jede Kante des Fehlerfortpflanzungsmodells konstruiert wird, und durch das Verbinden des Eingangs jedes Gewichtungsoperators (13) mit dem Ausgang der Verarbeitungseinheit (12), die für den Knoten am Ende der Kante eingerichtet wurde, für die der Gewichtungsoperator (13) steht, sowie durch das Verbinden des Ausgangs jedes Gewichtungsoperators (13) mit einem Eingang der Verarbeitungseinheit (12), die für den Knoten am Anfang der Kante eingerichtet wurde, wobei die Verarbeitungseinheit (12) arbeitet, indem sie die auf ihre Eingänge geführten reellen Zahlen zusammen mit einem Biaswert aufsummiert und auf die Summe eine Sigmoidfunktion (2') anwendet, derart, dass die Differenz zwischen der oberen und unteren Grenze der Sigmoidfunktion (2') 1 beträgt, und das Ergebnis auf ihren Ausgang führt, und wobei der Gewichtungsoperator (13) arbeitet, indem er die auf seinen Eingang geführte reelle Zahl mit einem konstanten Gewichtsparameter multipliziert und das Ergebnis auf seinen Ausgang führt, wobei der konstante Gewichtsparameter auf der Wahrscheinlichkeit basiert, dass kein vorheriger Fehler an der Komponente vorliegt, die auf den Knoten am Ende der i-ten ausgehenden Kante abgebildet ist, oder es wird ein Fehler über die i-te ausgehende Kante des Knotens fortgepflanzt, verringert um die Wahrscheinlichkeit, dass ein Fehler an der Komponente vorliegt, die auf den Knoten am Ende der i-ten ausgehenden Kante abgebildet ist, oder dass der Fehler sich nicht über die i-te ausgehende Kante des Knotens fortpflanzt.

2. Verfahren nach Anspruch 1, wobei Parameter des neuronalen Netzes bestimmt werden basierend auf (i) der Wahrscheinlichkeit (20), dass ein Fehler sich tatsächlich zu einer nachgeordneten Komponente oder Sensor fortpflanzt und eine Fehlernachricht (5) tatsächlich durch einen Sensor des Überwachungssystems (9) ausgegeben wird, in dem Fall, dass in einer Netzwerkkomponente (8) ein Fehler vorliegt.

3. Verfahren nach einem der Ansprüche 1 oder 2, wobei das neuronale Netz (7) vom Überwachungssystem (9) als eine Eingabe Fehlernachrichten (5) empfängt, die in reelle Zahlen übersetzt sind, wobei die Fehlernachrichten (5) von den Sensoren (S1 ... S5) ausgegeben werden.

4. Verfahren nach einem der vorhergehenden Ansprüche, wobei die Sigmoidfunktion (2') der Verarbeitungseinheit die spezielle Form einer logistischen Funktion hat, mit der Ausgabe des Summierers als Eingabe.

5. Verfahren nach einem der vorhergehenden Ansprüche, wobei der Biaswert b durch Folgendes definiert ist:

$$b = \log_2 \frac{P_0}{1 - P_0} + \sum_{i=1}^{n} \log_2 \frac{1 - P_i}{1 - \frac{Q_i}{n_i}}$$

wobei Po die A-priori-Wahrscheinlichkeit dafür ist, dass die Komponente oder der Sensor, die oder der auf den Knoten abgebildet ist, sich im Fehlerstatus befindet; n die Anzahl ausgehender Kanten in dem der Verarbeitungseinheit zugeordneten Knoten ist; $P_i$ die Fortpflanzungswahrscheinlichkeit des Fehlers über die i-te ausgehende Kante des Knotens ist; $Q_i$ die A-priori-Wahrscheinlichkeit dafür ist, dass ein Fehler an der Komponente vorliegt, die auf den Knoten am Ende der i-ten ausgehenden Kante des der Verarbeitungseinheit zugeordneten Knotens abgebildet ist; $n_i$ die Anzahl eingehender Kanten am Knoten an der i-ten ausgehenden Kante ist.

6. Verfahren nach einem der vorhergehenden Ansprüche, wobei der konstante Gewichtsparameter durch Folgendes definiert ist:

$$w_i = \log_2 \frac{P_i \cdot \left(1 - \frac{Q_i}{n_i}\right)}{(1 - P_i) \cdot \frac{Q_i}{n_i}}$$

wobei die Bedeutungen von $P_i$, $Q_i$ und $n_i$ wie in Anspruch 12 definiert sind.

7. Verfahren nach einem der Ansprüche 1 bis 6, wobei die Werte der Verarbeitungseinheiten (12) nach absteigenden Ausgabewerten sortiert und angezeigt werden, wobei die Verarbeitungseinheiten (12) mit den höchsten Ausgabewerten die Kandidaten für die gemeinsame Ursache (30) sind und wobei die Ausgabe der ermittelten Kandidaten für die gemeinsame Ursache (30) einen Netzwerkbetreiber dazu veranlasst einen Fehlerbehandlungsoperator zu starten, die Netzwerkkomponente zu überprüfen, die als ein Kandidat für die gemeinsame Ursache (30) identifiziert wurde, die Netzwerkkomponente neu zu starten oder auszutauschen oder eine Ausfallsicherungsfunktion einzuleiten.

8. Verfahren zum Feststellen einer gemeinsamen Ursache (11) von mehreren gleichzeitigen Fehlern in einem Computernetzwerk (100), wobei das Verfahren Folgendes umfasst:

Einrichten eines Modells der Fehlerfortpflanzung, das auf Wirkungszusammenhängen einer Anzahl Netzwerkkomponenten (8) des Computernetzwerks basiert;
Abbilden des Fehlerfortpflanzungsmodells (1) auf ein Netzwerk von Berechnungsoperatoren (14), die Summenoperatoren (3) und Sigmoidoperatoren (2) umfassen;
Empfangen mehrerer Fehlernachrichten (5), die von einem Überwachungssystem (9) erzeugt werden und die den aktivierten Störfall anzeigen;
Auswerten der Fehlernachrichten (5) basierend auf dem zugrunde liegenden Fehlerfortpflanzungsmodell (1) unter Verwendung des neuronalen Netzes (7),
wobei das Fehlerfortpflanzungsmodell ein gerichteter azyklischer Graph ist, der aus den Abhängigkeitsverhältnissen der Komponenten und Sensoren des Netzwerks konstruiert ist, wobei die Knoten des Graphen Sensoren und Systemkomponenten sind, die durch die Fehler unterscheidbar sind, die sie in anderen Systemkomponenten bewirken,
wobei die gerichteten Kanten des Fehlerfortpflanzungsmodells die Fortpflanzungswahrscheinlichkeit eines Fehlers repräsentieren, von der Anfangskomponente, die durch den Anfangsknoten repräsentiert ist, zur Endkomponente, die durch den Endknoten repräsentiert ist, wobei die Fortpflanzungswahrscheinlichkeit durch wenigstens einen der Punkte (i) Experimente (21) und (ii) Expertenwissen (22) gegeben ist;
Ermitteln, durch die Auswertung, wahrscheinlicher Kandidaten (30) für die gemeinsame Ursache des Störfalls;
Ausgeben der ermittelten Kandidaten für die gemeinsame Ursache (30),
wobei das Fehlerfortpflanzungsmodell (1) aus Topologieinformation (102) über das Computernetzwerk (100) und Fehlerfortpflanzungsregeln (101), die für die Komponenten des Computernetzwerks gelten, gebildet ist und wobei das Fehlerfortpflanzungsmodell (1) einen Fehlerfortpflanzungsgraphen (1') umfasst, der ein gerichteter Graph ist, der Knoten und gerichtete Kanten umfasst, und wobei das Überwachungssystem (9) mehrere Sensoren (S1 ... S5) umfasst, wobei jede Netzwerkkomponente (8) und jeder Sensor (S1 ... S5) des Überwachungssystems (9) durch einen Knoten des Fehlerfortpflanzungsgraphen (1') repräsentiert sind und jede gerichtete Kante des Graphen anzeigt, dass das Auftreten eines Fehlers in der Netzwerkkomponente (8), die von einem Knoten am Anfang der Kante repräsentiert wird, das Auftreten eines Fehlers oder die Verletzung der von einem Sensor überwachten Bedingungen in einer anderen Netzwerkkomponente (8) mit einer bestimmten Fortpflanzungswahrscheinlichkeit bewirkt, wobei die Netzwerkkomponente (8) oder der Sensor durch einen Knoten am Ende der Kante repräsentiert sind,
wobei die Sigmoidoperatoren (2) ein Eingangspotenzial über eine monoton ansteigende Sigmoidfunktion (2') auf ein Ausgangspotenzial führen,
wobei das Netzwerk von Operatoren, das Summenoperatoren (3) und Sigmoidoperatoren (2) umfasst, dadurch konstruiert wird, dass für jeden Knoten ein Summenoperator (3) eingerichtet wird und für jede Kante des Fehlerfortpflanzungsmodells ein Sigmoidoperator (2) eingerichtet wird und der Eingang jedes Sigmoidoperators (2) mit einem Ausgang des Summenoperators (3) verbunden wird, der für den Knoten am Ende der Kante eingerichtet ist, für die der Sigmoidoperator (2) steht, und der Ausgang jedes Sigmoidoperators (2) mit einem Eingang des Summenoperators (3) verbunden wird, der für den Knoten am Anfang der Kante eingerichtet ist, wobei der Summenoperator (3) arbeitet, indem er auf seine Eingänge geführte reelle Zahlen zusammen mit einem Biaswert aufsummiert und das Ergebnis auf seinen Ausgang führt, und wobei der Sigmoidoperator (2) arbeitet, indem er auf die reelle Zahl, die auf seinen Eingang geführt wird, eine Sigmoidfunktion (2') anwendet und das Ergebnis auf den Ausgang des Sigmoidoperators (2) führt,
wobei für ein Fehlerfortpflanzungsmodell, das für jede ausgehende Kante eines gegebenen Knotens dieselbe Fortpflanzungswahrscheinlichkeit definiert, der Biaswert und die Sigmoidfunktion (2') derart gewählt sind, dass in einem fehlerfreien Zustand des Computernetzwerks die Aktivierungsfunktion an ihrer unteren Grenze ist und von ihrer unteren Grenze zu ihrer oberen Grenze bereits nach der Aktivierung der Anzahl Eingänge ansteigt, die aus den Fortpflanzungswahrscheinlichkeiten der ausgehenden Kanten erwartet werden kann.

9. Verfahren nach Anspruch 8, wobei für ein Fehlerfortpflanzungsmodell, das für jede ausgehende Kante eines gegebenen Knotens dieselbe Fortpflanzungswahrscheinlichkeit P definiert, gilt, dass die Sigmoidfunktion (2') durch Folgendes definiert ist:

$$S(E) = \log_2 \frac{1 + 2^{-w/2 - E}}{2^{-w/2} + 2^{-E}}$$

$$w = 2 \cdot \frac{E_{max}}{n \cdot P}$$

wobei n die Anzahl Kanten ist, über die der Fehler sich fortpflanzt, wobei E der Eingabewert des Sigmoidoperators ist und wobei P die Fortpflanzungswahrscheinlichkeit für jede ausgehende Kante eines gegebenen Knotens ist und $E_{max}$ ein heuristischer Faktor zum Skalieren der Sigmoidfunktion ist, der so eingestellt ist, dass

$$S(E_{max})|_{w=2} \approx 0.998.$$

**10.** Verfahren nach Anspruch 8 oder 9, wobei der Biaswert b durch Folgendes definiert ist:

$$b = -E_{max} - \sum_{i=1}^{n} e_{i,FF},$$

wobei Emax ein heuristischer Faktor ist, und

$e_{i,FF}$

die i-te Eingabe des Summierers (3) ist unter der Bedingung, dass das Computernetzwerk fehlerfrei ist, und die Biaswerte aller Summenoperator, die direkt oder indirekt dem aktuellen zuführen, sind durch diese Vorschrift eingestellt.

**11.** Computernetzwerk, wobei das Computernetzwerk Folgendes umfasst:

ein Überwachungssystem zum Erkennen eines Störfalls in dem Computernetzwerk (100),
eine Inferenzmaschine (10) zum Feststellen einer gemeinsamen Ursache (11) eines Störfalls in einem Computernetzwerk, wobei das Feststellen der gemeinsamen Ursache (11) des Störfalls in dem Computernetzwerk das Einrichten eines Modells der Fehlerfortpflanzung beinhaltet, das auf Wirkungszusammenhängen einer Anzahl Netzwerkkomponenten (8) des Computernetzwerks basiert, wobei die Inferenzmaschine (10) für Folgendes programmiert ist:

Abbilden eines Fehlerfortpflanzungsmodells (1) auf ein neuronales Netz (2);
Empfangen mehrerer Fehlernachrichten (5), die von einem Überwachungssystem (9) erzeugt werden und die den Störfall anzeigen;
Auswerten der Fehlernachrichten (5) basierend auf dem zugrunde liegenden Fehlerfortpflanzungsmodell (1) unter Verwendung des neuronalen Netzes (7),
wobei das Fehlerfortpflanzungsmodell ein gerichteter azyklischer Graph ist, der aus den Abhängigkeitsverhältnissen der Komponenten und Sensoren des Netzwerks konstruiert ist, wobei die Knoten des Graphen Sensoren und Systemkomponenten sind, die durch die Fehler unterscheidbar sind, die sie in anderen Systemkomponenten bewirken,
wobei die gerichteten Kanten des Fehlerfortpflanzungsmodells die Fortpflanzungswahrscheinlichkeit eines Fehlers repräsentieren, von der Anfangskomponente, die durch den Anfangsknoten repräsentiert ist, zur Endkomponente, die durch den Endknoten repräsentiert ist, wobei die Fortpflanzungswahrscheinlichkeit durch wenigstens einen der Punkte (i) Experimente (21) und (ii) Expertenwissen (22) gegeben ist;
Ermitteln, durch die Auswertung, wahrscheinlicher Kandidaten (30) für die gemeinsame Ursache des Störfalls;
Ausgeben der ermittelten Kandidaten für die gemeinsame Ursache (30), wobei das Fehlerfortpflanzungsmodell (1) aus Topologieinformation (102) über das Computernetzwerk (100) und Fehlerfortpflanzungsregeln (101), die für die Komponenten des Computernetzwerks gelten, gebildet ist und wobei das Fehlerfortpflanzungsmodell (1) einen Fehlerfortpflanzungsgraphen (1') umfasst, der ein gerichteter Graph ist, der Knoten und gerichtete Kanten umfasst, und wobei das Überwachungssystem (9) mehrere Sensoren (S1 ... S5) umfasst, wobei jede Netzwerkkomponente (8) und jeder Sensor (S1 ... S5) des Überwachungssystems (9) durch einen Knoten des Fehlerfortpflanzungsgraphen (1') repräsentiert sind und jede gerichtete Kante des Graphen anzeigt, dass das Auftreten eines Fehlers in der Netzwerkkomponente (8), die von einem Knoten am Anfang der Kante repräsentiert wird, das Auftreten eines Fehlers oder die Verletzung der von einem Sensor überwachten Bedingungen in einer anderen Netzwerkkomponente (8) mit einer bestimmten Fortpflanzungswahrscheinlichkeit bewirkt, wobei die Netzwerkkomponente (8) oder der Sensor durch einen Knoten am Ende der Kante repräsentiert sind,

wobei das neuronale Netz durch das Einrichten einer Verarbeitungseinheit (12) für jeden Knoten und das Einrichten eines Gewichtungsoperators (13) für jede Kante des Fehlerfortpflanzungsmodells konstruiert wird, und durch das Verbinden des Eingangs jedes Gewichtungsoperators (13) mit dem Ausgang der Verarbeitungseinheit (12), die für den Knoten am Ende der Kante eingerichtet wurde, für die der Gewichtungsoperator (13) steht, sowie durch das Verbinden des Ausgangs jedes Gewichtungsoperators (13) mit einem Eingang der Verarbeitungseinheit (12), die für den Knoten am Anfang der Kante eingerichtet wurde, wobei die Verarbeitungseinheit (12) arbeitet, indem sie die auf ihre Eingänge geführten reellen Zahlen zusammen mit einem Biaswert aufsummiert und auf die Summe eine Sigmoidfunktion (2') anwendet, derart, dass die Differenz zwischen der oberen und unteren Grenze der Sigmoidfunktion (2') 1 beträgt, und das Ergebnis auf ihren Ausgang führt, und wobei der Gewichtungsoperator (13) arbeitet, indem er die auf seinen Eingang geführte reelle Zahl mit einem konstanten Gewichtsparameter multipliziert und das Ergebnis auf seinen Ausgang führt,

wobei der konstante Gewichtsparameter auf der Wahrscheinlichkeit basiert, dass kein vorheriger Fehler an der Komponente vorliegt, die auf den Knoten am Ende der i-ten ausgehenden Kante abgebildet ist, oder es wird ein Fehler über die i-te ausgehende Kante des Knotens fortgepflanzt, verringert um die Wahrscheinlichkeit, dass ein Fehler an der Komponente vorliegt, die auf den Knoten am Ende der i-ten ausgehenden Kante abgebildet ist, oder dass der Fehler sich nicht über die i-te ausgehende Kante des Knotens fortpflanzt.

12. Computernetzwerk nach Anspruch 11, das eine Inferenzmaschine umfasst, die dafür programmiert ist, eine der Aktivitäten der Ansprüche 2 bis 10 auszuführen.

13. Computernetzwerk, wobei das Computernetzwerk Folgendes umfasst:

ein Überwachungssystem zum Erkennen eines Störfalls in dem Computernetzwerk (100),

eine Inferenzmaschine (10) zum Feststellen einer gemeinsamen Ursache (11) eines Störfalls in einem Computernetzwerk, wobei das Feststellen der gemeinsamen Ursache (11) des Störfalls in dem Computernetzwerk das Einrichten eines Modells der Fehlerfortpflanzung beinhaltet, das auf Wirkungszusammenhängen einer Anzahl Netzwerkkomponenten (8) des Computernetzwerks basiert, wobei die Inferenzmaschine (10) für Folgendes programmiert ist:

Abbilden eines Fehlerfortpflanzungsmodells (1) auf ein Netzwerk von Berechnungsoperatoren (14), die Summenoperatoren (3) und Sigmoidoperatoren (2) umfassen;

Empfangen mehrerer Fehlernachrichten (5), die von einem Überwachungssystem (9) erzeugt werden und die den Störfall anzeigen;

Auswerten der Fehlernachrichten (5) basierend auf dem zugrunde liegenden Fehlerfortpflanzungsmodell (1) unter Verwendung der Berechnungsoperatoren (14), die Summenoperatoren (3) und Sigmoidoperatoren (2) umfassen,

wobei das Fehlerfortpflanzungsmodell ein gerichteter azyklischer Graph ist, der aus den Abhängigkeitsverhältnissen der Komponenten und Sensoren des Netzwerks konstruiert ist, wobei die Knoten des Graphen Sensoren und Systemkomponenten sind, die durch die Fehler unterscheidbar sind, die sie in anderen Systemkomponenten bewirken,

wobei die gerichteten Kanten des Fehlerfortpflanzungsmodells die Fortpflanzungswahrscheinlichkeit eines Fehlers repräsentieren, von der Anfangskomponente, die durch den Anfangsknoten repräsentiert ist, zur Endkomponente, die durch den Endknoten repräsentiert ist, wobei die Fortpflanzungswahrscheinlichkeit durch wenigstens einen der Punkte (i) Experimente (21) und (ii) Expertenwissen (22) gegeben ist;

Ermitteln, durch die Auswertung, wahrscheinlicher Kandidaten (30) für die gemeinsame Ursache des Störfalls;

Ausgeben der ermittelten Kandidaten für die gemeinsame Ursache (30),

wobei die Sigmoidoperatoren (2) ein Eingangspotenzial über eine monoton ansteigende Sigmoidfunktion (2') auf ein Ausgangspotenzial führen,

wobei das Netzwerk von Operatoren, das Summenoperatoren (3) und Sigmoidoperatoren (2) umfasst, dadurch konstruiert wird, dass für jeden Knoten ein Summenoperator (3) eingerichtet wird und für jede Kante des Fehlerfortpflanzungsmodells ein Sigmoidoperator (2) eingerichtet wird und der Eingang jedes Sigmoidoperators (2) mit einem Ausgang des Summenoperators (3) verbunden wird, der für den Knoten am Ende der Kante eingerichtet ist, für die der Sigmoidoperator (2) steht, und der Ausgang jedes Sigmoidoperators (2) mit einem Eingang des Summenoperators (3) verbunden wird, der für den Knoten am Anfang der Kante eingerichtet ist, wobei der Summenoperator (3) arbeitet, indem er auf seine Eingänge geführte reelle Zahlen zusammen mit einem Biaswert aufsummiert und das Ergebnis auf seinen Ausgang führt, und wobei der Sigmoidoperator (2) arbeitet, indem er auf die reelle Zahl, die auf seinen Eingang geführt wird, eine Sigmoidfunktion (2') anwendet und das Ergebnis auf den Ausgang des Sigmoidoperators (2) führt, wobei für ein Fehlerfortpflanzungsmodell, das für jede ausgehende Kante eines gegebenen Knotens dieselbe Fortpflanzungswahrscheinlichkeit definiert, der Biaswert und die Sigmoidfunktion (2') derart gewählt sind, dass in einem fehlerfreien Zustand des Computernetzwerks die Aktivierungsfunktion an ihrer unteren Grenze ist und von ihrer unteren Grenze zu ihrer oberen Grenze bereits nach der Aktivierung der Anzahl Eingänge ansteigt, die aus den Fortpflanzungswahrscheinlichkeiten der ausgehenden Kanten erwartet werden kann.

**14.** Computernetzwerk nach Anspruch 13, das eine Inferenzmaschine umfasst, die dafür programmiert ist, eine der Aktivitäten der Ansprüche 2 bis 10 auszuführen.

## Revendications

**1.** Procédé de détermination d'une cause première (11) d'une pluralité d'erreurs simultanées dans un réseau informatique (100), le procédé comprenant :

la création d'un modèle de propagation d'erreur, qui est basé sur des interdépendances d'une pluralité de composants de réseau (8) du réseau informatique ;
la cartographie du modèle de propagation d'erreur (1) sur un réseau neuronal (7) ;
la réception d'une pluralité de messages d'erreur (5) générés par un système de surveillance (9) indicatifs du défaut activé ;
l'analyse des messages d'erreur (5) sur la base du modèle de propagation d'erreur (1) sous-jacent à l'aide du réseau neuronal (7),
dans lequel le modèle de propagation d'erreur est un graphique acyclique dirigé construit à partir de la relation de dépendance des composants de réseau et capteurs, dans lequel les sommets du graphique sont des capteurs et composants de système différenciables par les erreurs qu'ils impliquent dans d'autres composants de système,
dans lequel les bords dirigés du modèle de propagation d'erreur représentent la probabilité de propagation d'une erreur à partir du composant de queue représenté par le sommet de queue vers le composant de tête représenté par le sommet de tête, la probabilité de propagation étant déterminée par au moins un parmi (i) des expériences (21) et (ii) une connaissance spécialisée (22) ;
la détermination, par l'analyse, de candidats défaillants de cause première probables (30) ;
la sortie des candidats déterminés pour la cause première (30)
dans lequel le modèle de propagation d'erreur (1) est construit à partir d'informations de topologie (102) du réseau informatique (100) et de règles de propagation d'erreur (101) applicables aux composants de réseau informatique et dans lequel le modèle de propagation d'erreur (1) comprend un graphique de propagation d'erreur (1'), qui est un graphique dirigé comprenant des sommets et des bords dirigés, et le système de surveillance (9) comprend une pluralité de capteurs (S1...S5), dans lequel chaque composant de réseau (8) et chaque capteur (S1...S5) du système de surveillance (9) sont représentés par un sommet du graphique de propagation d'erreur (1') et chaque bord dirigé du graphique indique que la présence d'une erreur dans le composant de réseau (8) représenté par un sommet au niveau de la queue du bord implique la présence d'une erreur ou la violation des conditions surveillées par un capteur dans un autre composant de réseau (8) avec une certaine probabilité de propagation, dans lequel le composant de réseau (8) ou capteur est représenté par un sommet au niveau de la tête du bord,
dans lequel le réseau neuronal est construit en créant une unité de traitement (12) pour chaque sommet et en créant un opérateur de pondération (13) pour chaque bord du modèle de propagation d'erreur et en reliant l'entrée de chaque opérateur de pondération (13) à la sortie de l'unité de traitement (12) créée pour le sommet au niveau de la tête du bord que représente l'opérateur de pondération (13), et en reliant la sortie de chaque opérateur de pondération (13) à une entrée de l'unité de traitement (12) créée pour le sommet au niveau de la queue du bord, dans lequel l'unité de traitement (12) travaille en additionnant les nombres réels présentés à ses entrées plus une valeur de biais et en appliquant à la somme une fonction sigmoïde (2') de telle sorte que la différence entre les limites supérieure et inférieure de la fonction sigmoïde (2') est 1 et en présentant le résultat à sa sortie et dans lequel l'opérateur de pondération (13) travaille en multipliant le nombre réel présenté sur son entrée par un paramètre de poids constant et en présentant le résultat sur sa sortie,
dans lequel le paramètre de poids constant est basé sur la probabilité qu'il n'y a pas d'erreur antérieure présente au niveau du composant mappé sur le sommet au niveau de la tête du ième bord sortant ou qu'une erreur se propage via le ième bord sortant du sommet réduit par la probabilité qu'il y a une erreur présente au niveau du composant mappé sur le sommet au niveau de la tête du ième bord sortant ou que l'erreur ne se propage pas via le ième bord sortant du sommet.

2. Procédé selon la revendication 1, dans lequel des paramètres du réseau neuronal sont déterminés sur la base de (i) la probabilité (20) que l'erreur se propage réellement vers un composant ou capteur dépendant et qu'un message d'erreur (5) est réellement émis par un capteur du système de surveillance (9) dans le cas où une erreur est présente dans un composant de réseau (8).

3. Procédé selon l'une quelconque des revendications 1 ou 2, dans lequel le réseau neuronal (7) reçoit des messages d'erreur (5) provenant du système de surveillance (9) translatés en nombres réels en tant qu'entrée, dans lequel les messages d'erreur (5) sont émis par les capteurs (S1...S5).

4. Procédé selon l'une quelconque des revendications précédentes, dans lequel la fonction sigmoïde (2') de l'unité de traitement présente la forme particulière d'une fonction logistique avec la sortie de l'additionneur comme entrée.

5. Procédé selon l'une quelconque des revendications précédentes, dans lequel la valeur de biais b est définie par :

$$b = \log_2 \frac{P_0}{1 - P_0} + \sum_{i=1}^{n} \log_2 \frac{1 - P_i}{1 - \frac{Q_i}{n_i}}$$

où $P_0$ est la probabilité antérieure du composant ou capteur mappé sur le sommet qui est dans le statut erreur ; n est le nombre de bords sortants dans le sommet associé à l'unité de traitement ; $P_i$ est la probabilité de propagation de l'erreur via le ième bord sortant du sommet ; $Q_i$ est la probabilité antérieure d'un erreur qui est présente au niveau du composant mappé sur le sommet au niveau de la tête du ième bord sortant du sommet associé à l'unité de traitement ; $n_i$ est le nombre de bords entrants au niveau du sommet au niveau du ième bord sortant.

6. Procédé selon l'une quelconque des revendications précédentes, dans lequel le paramètre de poids constant est défini par :

$$w_i = \log_2 \frac{P_i \cdot \left(1 - \frac{Q_i}{n_i}\right)}{(1 - P_i) \cdot \frac{Q_i}{n_i}}$$

dans lequel les significations de $P_i$, $Q_i$ et $n_i$ sont définies dans la revendication 12.

7. Procédé selon l'une quelconque des revendications 1 à 6, dans lequel les valeurs des unités de traitement (12) sont triées par valeurs de sortie descendantes et affichées, les unités de traitement (12) ayant les valeurs de sortie les plus élevées étant les candidats pour la cause première (30) et dans lequel la sortie des candidats déterminés pour la cause première (30) amène un opérateur réseau à démarrer un opérateur de gestion d'erreur, à inspecter le composant de réseau identifié comme candidat pour la cause première (30), à redémarrer ou changer le composant de réseau, ou lancer une fonction de basculement.

8. Procédé de détermination d'une cause première (11) d'une pluralité d'erreurs simultanées dans un réseau informatique (100), le procédé comprenant :

la création d'un modèle de propagation d'erreur, qui est basé sur des interdépendances d'une pluralité de composants de réseau (8) du réseau informatique ;

le mappage du modèle de propagation d'erreur (1) sur un réseau d'opérateurs informatiques (14) comprenant des opérateurs de somme (3) et des opérateurs sigmoïdes (2) ;

la réception d'une pluralité de messages d'erreur (5) générés par un système de surveillance (9) indicatifs du défaut activé ;

l'analyse des messages d'erreur (5) sur la base du modèle de propagation d'erreur (1) sous-jacent à l'aide du réseau neuronal (7),

dans lequel le modèle de propagation d'erreur est un graphique acyclique dirigé construit à partir de la relation de dépendance des composants de réseau et capteurs, dans lequel les sommets du graphique sont des capteurs et composants de système différenciables par les erreurs qu'ils impliquent dans d'autres composants de système,

dans lequel les bords dirigés du modèle de propagation d'erreur représentent la probabilité de propagation d'une erreur à partir du composant de queue représenté par le sommet de queue vers le composant de tête représenté par le sommet de tête, la probabilité de propagation étant déterminée par au moins un parmi (i) des expériences (21) et (ii) une connaissance spécialisée (22) ;

la détermination, par l'analyse, de candidats défaillants de cause première probables (30) ;

la sortie des candidats déterminés pour la cause première (30)

dans lequel le modèle de propagation d'erreur (1) est construit à partir d'informations de topologie (102) du réseau informatique (100) et de règles de propagation d'erreur (101) applicables aux composants de réseau informatique et dans lequel le modèle de propagation d'erreur (1) comprend un graphique de propagation d'erreur (1'), qui est un graphique dirigé comprenant des sommets et des bords dirigés, et le système de surveillance (9) comprend une pluralité de capteurs (S1...S5), dans lequel chaque composant de réseau (8) et chaque capteur (S1...S5) du système de surveillance (9) sont représentés par un sommet du graphique de propagation d'erreur (1') et chaque bord dirigé du graphique indique que la présence d'une erreur dans le composant de réseau (8) représenté par un sommet au niveau de la queue du bord implique la présence d'une erreur ou la violation des conditions surveillées par un capteur dans un autre composant de réseau (8) avec une certaine probabilité de propagation, dans lequel le composant de réseau (8) ou capteur est représenté par un sommet au niveau de la tête du bord,

dans lequel les opérateurs sigmoïdes (2) couplent un potentiel d'entrée à un potentiel de sortie par une fonction sigmoïde à augmentation monotone (2'),

dans lequel le réseau d'opérateurs comprenant des opérateurs de somme (3) et des opérateurs sigmoïdes (2) est construit en créant un opérateur de somme (3) pour chaque sommet et en créant un opérateur sigmoïde (2) pour chaque bord du modèle de propagation d'erreur et en reliant l'entrée de chaque opérateur sigmoïde (2) à une sortie de l'opérateur de somme (3) créée pour le sommet au niveau de la tête du bord que représente l'opérateur sigmoïde (2), et en reliant la sortie de chaque opérateur sigmoïde (2) à une entrée de l'opérateur de somme (3) créée pour le sommet au niveau de la queue du bord, dans lequel l'opérateur de somme (3) travaille en additionnant des nombres réels présentés à ses entrées plus une valeur de biais et en appliquant le résultat à sa sortie et dans lequel l'opérateur sigmoïde (2) travaille en appliquant une fonction sigmoïde (2') au nombre réel présenté sur son entrée et en présentant le résultat sur la sortie de l'opérateur sigmoïde (2),

dans lequel pour un modèle de propagation d'erreur définissant la même probabilité de propagation pour chaque bord sortant d'un sommet donné, le biais et la fonction sigmoïde (2') sont choisis de telle sorte que dans un état dépourvu d'erreur du réseau informatique, la fonction d'activation est à sa limite inférieure et oscille de sa limite inférieure à sa limite supérieure déjà après l'activation du nombre d'entrées qui peuvent être attendues à partir des probabilités de propagation des bords sortants.

9. Procédé selon la revendication 8, dans lequel pour un modèle de propagation d'erreur définissant la même probabilité de propagation P pour chaque bord sortant d'un sommet donné et dans lequel la fonction sigmoïde (2') est définie par

$$S(E) = \log_2 \frac{1 + 2^{-w/2-E}}{2^{-w/2} + 2^{-E}}$$

$$w = 2 \cdot \frac{E_{max}}{n \cdot P}$$

où n est le nombre de bords à travers lesquels l'erreur se propage dans lequel $E$ est la valeur d'entrée de l'opérateur sigmoïde et dans lequel P est ladite probabilité de propagation pour chaque bord sortant d'un sommet donné, et $E_{max}$ est un facteur heuristique pour réduire la fonction sigmoïde, établie de telle sorte que

$$S(E_{max})|_{w=2} \approx 0.998.$$

10. Procédé selon l'une quelconque des revendications 8 ou 9, dans lequel la valeur de biais b est définie par :

$$b = -E_{max} - \sum_{i=1}^{n} e_{i,FF},$$

dans lequel $E_{max}$ est un facteur heuristique et

$e_{i,FF}$

est la ième entrée de l'additionneur (3) dans la condition où le réseau informatique est dépourvu d'erreur et la valeur de biais de tous les opérateurs de somme entrant directement ou indirectement dans celui actuel est définie par cette règle.

11. Réseau informatique, le réseau informatique comprenant :

un système de surveillance pour identifier un défaut dans le réseau informatique (100)
un moteur d'inférence (10) pour déterminer une cause première (11) d'un défaut dans un réseau informatique, dans lequel la détermination de la cause première (11) du défaut dans le réseau informatique implique la création d'un modèle de propagation d'erreur, qui est basé sur des interdépendances d'une pluralité de composants de réseau (8) du réseau informatique, le moteur d'inférence (10) étant programmé pour
mapper un modèle de propagation d'erreur (1) sur un modèle de réseau neuronal (2) ;
recevoir une pluralité de messages d'erreur (5) générés par un système de surveillance (9) indicatifs du défaut ;
analyser les messages d'erreur (5) sur la base du modèle de propagation d'erreur (1) sous-jacent à l'aide du réseau neuronal (7)
dans lequel le modèle de propagation d'erreur est un graphique acyclique dirigé construit à partir de la relation de dépendance des composants de réseau et capteurs, dans lequel les sommets du graphique sont des capteurs et composants de système différenciables par les erreurs qu'ils impliquent dans d'autres composants de système,
dans lequel les bords dirigés du modèle de propagation d'erreur représentent la probabilité de propagation d'une erreur à partir du composant de queue représenté par le sommet de queue vers le composant de tête représenté par le sommet de tête, la probabilité de propagation étant déterminée par au moins un parmi (i) des expériences (21) et (ii) une connaissance spécialisée (22) ;
déterminer, par l'analyse, des candidats défaillants de cause première probables (30) ;
sortir les candidats déterminés pour la cause première (30),
dans lequel le modèle de propagation d'erreur (1) est construit à partir d'informations de topologie (102) du réseau informatique (100) et de règles de propagation d'erreur (101) applicables aux composants de réseau informatique et dans lequel le modèle de propagation d'erreur (1) comprend un graphique de propagation d'erreur (1'), qui est un graphique dirigé comprenant des sommets et des bords dirigés, et le système de surveillance (9) comprend une pluralité de capteurs (S1...S5), dans lequel chaque composant de réseau (8) et chaque capteur (S1...S5) du système de surveillance (9) sont représentés par un sommet du graphique de propagation d'erreur (1') et chaque bord dirigé du graphique indique que la présence d'une erreur dans le composant de réseau (8) représenté par un sommet au niveau de la queue du bord implique la présence d'une erreur ou la violation des conditions surveillées par un capteur dans un autre composant de réseau (8) avec une certaine probabilité de propagation, dans lequel le composant de réseau (8) ou capteur est représenté par un sommet au niveau de la tête du bord,
dans lequel le réseau neuronal est construit en créant une unité de traitement (12) pour chaque sommet et en créant un opérateur de pondération (13) pour chaque bord du modèle de propagation d'erreur et en reliant l'entrée de chaque opérateur de pondération (13) à la sortie de l'unité de traitement (12) créée pour le sommet au niveau de la tête du bord que représente l'opérateur de pondération (13), et en reliant la sortie de chaque opérateur de pondération (13) à une entrée de l'unité de traitement (12) créée pour le sommet au niveau de la queue du bord, dans lequel l'unité de traitement (12) travaille en additionnant les nombres réels présentés à ses entrées plus une valeur de biais et en appliquant à la somme une fonction sigmoïde (2') de telle sorte que la différence entre les limites supérieure et inférieure de la fonction sigmoïde (2') est 1 et en présentant le résultat à sa sortie et dans lequel l'opérateur de pondération (13) travaille en multipliant le nombre réel présenté sur son entrée par un paramètre de poids constant et en présentant le résultat sur sa sortie,

dans lequel le paramètre de poids constant est basé sur la probabilité qu'il n'y a pas d'erreur antérieure présente au niveau du composant mappé sur le sommet au niveau de la tête du ième bord sortant ou qu'une erreur se propage via le ième bord sortant du sommet réduit par la probabilité qu'il y a une erreur présente au niveau du composant mappé sur le sommet au niveau de la tête du ième bord sortant ou que l'erreur ne se propage pas via le ième bord sortant du sommet.

12. Réseau informatique selon la revendication 11, comprenant un moteur d'inférence qui est programmé pour effectuer l'une quelconque des activités selon les revendications 2 à 10.

13. Réseau informatique, le réseau informatique comprenant :

un système de surveillance pour identifier un défaut dans le réseau informatique (100)
un moteur d'inférence (10) pour déterminer une cause première (11) d'un défaut dans un réseau informatique, dans lequel la détermination de la cause première (11) du défaut dans le réseau informatique implique la création d'un modèle de propagation d'erreur, qui est basé sur des interdépendances d'une pluralité de composants de réseau (8) du réseau informatique, le moteur d'inférence (10) étant programmé pour
mapper un modèle de propagation d'erreur (1) sur un réseau d'opérateurs informatiques (14) comprenant des opérateurs de somme (3) et des opérateurs sigmoïdes (2) ;
recevoir une pluralité de messages d'erreur (5) générés par un système de surveillance (9) indicatifs du défaut ;
analyser les messages d'erreur (5) sur la base du modèle de propagation d'erreur (1) sous-jacent à l'aide du réseau d'opérateurs (14) comprenant des opérateurs de somme (3) et des opérateurs sigmoïdes (2),
dans lequel le modèle de propagation d'erreur est un graphique acyclique dirigé construit à partir de la relation de dépendance des composants de réseau et capteurs, dans lequel les sommets du graphique sont des capteurs et composants de système différenciables par les erreurs qu'ils impliquent dans d'autres composants de système,
dans lequel les bords dirigés du modèle de propagation d'erreur représentent la probabilité de propagation d'une erreur à partir du composant de queue représenté par le sommet de queue vers le composant de tête représenté par le sommet de tête, la probabilité de propagation étant déterminée par au moins un parmi (i) des expériences (21) et (ii) une connaissance spécialisée (22) ;
déterminer, par l'analyse, des candidats défaillants de cause première probables (30) ;
sortir les candidats déterminés pour la cause première (30),
dans lequel les opérateurs sigmoïdes (2) couplent un potentiel d'entrée à un potentiel de sortie par une fonction sigmoïde à augmentation monotone (2'),
dans lequel le réseau d'opérateurs comprenant des opérateurs de somme (3) et des opérateurs sigmoïdes (2) est construit en créant un opérateur de somme (3) pour chaque sommet et en créant un opérateur sigmoïde (2) pour chaque bord du modèle de propagation d'erreur et en reliant l'entrée de chaque opérateur sigmoïde (2) à une sortie de l'opérateur de somme (3) créée pour le sommet au niveau de la tête du bord que représente l'opérateur sigmoïde (2), et en reliant la sortie de chaque opérateur sigmoïde (2) à une entrée de l'opérateur de somme (3) créée pour le sommet au niveau de la queue du bord, dans lequel l'opérateur de somme (3) travaille en additionnant des nombres réels présentés à ses entrées plus une valeur de biais et en appliquant le résultat à sa sortie et dans lequel l'opérateur sigmoïde (2) travaille en appliquant une fonction sigmoïde (2') au nombre réel présenté sur son entrée et en présentant le résultat sur la sortie de l'opérateur sigmoïde (2),
dans lequel pour un modèle de propagation d'erreur définissant la même probabilité de propagation pour chaque bord sortant d'un sommet donné, le biais et la fonction sigmoïde (2') sont choisis de telle sorte que dans un état dépourvu d'erreur du réseau informatique, la fonction d'activation est à sa limite inférieure et oscille de sa limite inférieure à sa limite supérieure déjà après l'activation du nombre d'entrées qui peuvent être attendues à partir des probabilités de propagation des bords sortants.

14. Réseau informatique selon la revendication 13, comprenant un moteur d'inférence qui est programmé pour effectuer l'une quelconque des activités selon les revendications 2 à 10.

30 ⎯ root-cause fault candidates

10 ⎯ inference engine

S3  5   S2  5   S1  5   S4  5   S5  5

9 ⎯

| Sensor connection #3 | Sensor connection #2 | Sensor connection #1 | Sensor connection #4 | Sensor connection #5 |

NIC A:eth0   NIC B:eth0   NIC C:eth0   NIC C:eth1   NIC D:eth0

100 ⎯

VM Guest A   VM Guest B   LAN 1   LAN 2   VM Guest C   VM Guest D

8 ⎯ Host 1   Logical disk #1   Logical disk #3   NW switch   Logical disk #2   Host 2

11

1

11   Storage Box #1   11   Storage Box #2   11

Fig. 1

**Fig. 2**

EP 3 691 188 B1

Fig. 3

**Fig. 4**

Determining the odds-assignment (80) and error propagation rules (101) and prior failure probabilities (81) — I1

Constructing an error propagation model (1) by applying the rules to topology information (102) — I2

Mapping the error propagation graph (1') to a neural network (14) or an equivalent network of operators (7) — I3

Receiving a plurality of error messages and setting the bias (4) values of the processing units (12) or sum operators (3) mapped to the issuing sensors accordingly — I4

Analyzing the error messages by performing the computations the neural network (14) or the equivalent network of operators (7) prescribe — I5

Ranking (by the output) the sum operators (3) or processing units (12) and outputting the network components (8) associated with the top items as root cause candidates (30) — I6

human network operator starts an error handler operator, inspects the network component identified as a candidate for the root cause (30), reboots or exchanges the network component or initiates a failover routine — I7

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MALGORZATA STEINDERA ; ADARSHPAL S. SETHIB.** *Science of Computer Programming,* November 2004, vol. 53 (2), 165-194

- Knowledge-Based Artificial Neural Networks. **GEOFFREY G. TOWELL ; JUDE W. SHAVLIK.** Artificial Intelligence. vol. 70, 119-165